# EUROPEAN PATENT APPLICATION

(11) **EP 4 684 964 A1**
(43) Date of publication of application: **28.01.2026**
(21) Application number: 23934778.4
(22) Date of filing: 05.07.2023
(51) Int. Cl.: B32B 37/06, B32B 37/10, B32B 37/08, B32B 37/14, B32B 38/18

(54) **STAINLESS STEEL CLAD PLATE FOR BRIDGE STRUCTURE, AND PREPARATION METHOD FOR STAINLESS STEEL CLAD PLATE**

(30) Priority: 25.04.2023 CN 202310451356
(71) Applicant: Institute of Research of Iron and Steel, Jiangsu Province/Sha-Steel, Co. Ltd (CN), Suzhou, Jiangsu 215625 (CN); Jiangsu Shagang Steel Co., Ltd., Suzhou, Jiangsu 215625 (CN); Jiangsu Shagang Group Co., Ltd., Suzhou, Jiangsu 215625 (CN)
(72) Inventor: ZHEN, Fan, Suzhou, Jiangsu 215625 (CN); QU, Jinbo, Suzhou, Jiangsu 215625 (CN); SHAO, Chunjuan, Suzhou, Jiangsu 215625 (CN); YANG, Hao, Suzhou, Jiangsu 215625 (CN)
(74) Representative: Gille Hrabal Partnerschaftsgesellschaft mbB Patentanwälte
(86) International application number: PCT/CN2023/105901
(87) International publication number: WO 2024/221603

(57) **Abstract**

The present application discloses a stainless steel clad plate for bridge structures and a preparation method thereof. In the method, a blank assembly is formed by arranging an upper carbon steel base material A, a lower carbon steel base material B, an intermediate layer comprising at least two stainless steel cladding materials, and four sealing strips surrounding four side edges of the intermediate layer, wherein a circular through hole is formed in the sealing strip, and a steel pipe is welded in the through hole; during overlay welding, a hole is reserved around the steel pipe; after vacuumizing, the steel pipe is folded into the reserved hole; then full welding is performed to seal the steel pipe in the hole.

## Description

### TECHNICAL FIELD

The present application relates to a stainless steel clad plate for bridge structures and a method for preparing the same, belonging to the technical field of steel material preparation.

### BACKGROUND

With the continuous development of science and industry, ordinary alloy plates can hardly meet the comprehensive performance requirements of industrial development for materials, thus composite plates have emerged. Stainless steel clad plate is a composite material that metallurgically bonds a carbon steel or low alloy steel base material layer with a stainless steel cladding material layer. Stainless steel clad plate not only has the corrosion resistance of the stainless steel cladding layer, but also has the outstanding mechanical properties and price advantages of the carbon steel or low alloy steel base layer, representing an important development direction for steel materials.

In recent years, with increasing requirements for safety and longevity of steel bridges, rust and corrosion prevention of steel bridge structures has become increasingly prominent. Covering the bridge steel surface with a corrosion-resistant protective material to replace single bridge steel plates can achieve long-term corrosion prevention goals that coating processes cannot achieve. Therefore, stainless steel clad plate has become a relatively ideal choice. However, due to preparation technology limitations, existing stainless steel clad plates have defects such as poor plate shape, poor surface quality, poor interface bonding quality, and difficult and unstable welding during application. The preparation process also has problems such as high pollution, high difficulty, low production efficiency, and low yield rate.

Specifically, current preparation technologies for stainless steel clad plates are divided into explosion bonding and roll bonding.

Regarding explosion bonding technology, for example, Chinese patent application with publication number CN110064835A uses explosion bonding to achieve bonding between the base material and cladding material. On one hand, the explosion causes environmental vibration, noise and dust pollution, and on the other hand, the clad plates produced by explosion bonding have relatively poor plate shape and surface quality.

Regarding roll bonding technology, some have problems of high processing difficulty, low production efficiency and low yield rate, such as the groove-cutting blank preparation technology used in Chinese patent application with publication number CN107009090A; some have problems of poor interface bonding and poor surface quality, such as Chinese patent application with publication number CN 109694986A, where the stainless steel cladding layer is exposed, the surface quality of the side surface of the stainless steel cladding layer is difficult to guarantee, and the aluminum strips are prone to fall off during composite blank transportation, leading to air leakage and thus affecting interface bonding quality. Furthermore, no existing technology has disclosed the influence of rolling process on interface bonding quality, especially solutions that consider interface bonding quality while ensuring the inherent properties of both base material layer and cladding material layer.

### SUMMARY

The object of the present application is to provide a stainless steel clad plate for bridge structures and a method for preparing the same, to solve at least one of the technical problems mentioned in the background.

To achieve the above object, an embodiment of the present application provides a method for preparing a stainless steel clad plate for bridge structures. The method comprises process steps of billet preparation, release agent coating, blank assembly, seal welding, vacuumizing, sealing, heating, rolling, cooling, cutting, and leveling; wherein:
in the blank assembly step: a blank assembly is formed by arranging an upper carbon steel base material A, a lower carbon steel base material B, an intermediate layer comprising at least two stainless steel cladding materials, and four sealing strips surrounding four side edges of the intermediate layer, wherein gas shielded welding is performed between the sealing strips and base material A, and between the sealing strips and base material B to form a base blank; wherein the base blank has grooves with a depth of D formed by base material A, sealing strips and base material B on all four side edges, and a circular through hole is formed in the sealing strip on one side edge of the base blank, and a steel pipe with an outer diameter of r is welded in the through hole;
in the seal welding step: overlay welding is performed on the grooves, wherein during overlay welding, a hole concentric with the steel pipe and having a radius R>r is reserved around the steel pipe; the overlay welding is terminated when the penetration depth of the groove on the side edge where the steel pipe is located reaches 2/3 of the groove depth, and the penetration depth of the grooves on other side edges reaches more than 2/3 of the groove depth;
in the sealing step: after the vacuumizing step of the base blank is completed, the steel pipe is heated with a flame gun, flattened, and folded into the reserved hole; then gas shielded welding is performed to fully weld the hole to seal the steel pipe in the hole; thereafter, overlay welding is continued until the grooves are filled, and finally cover welding is performed to obtain a composite blank;
in the rolling step: the composite blank from the heating furnace is rolled to produce a unified clad plate; during the entire rolling process, transverse rolling is adopted for the first n passes, and longitudinal rolling is adopted from the n+1th pass, and the reduction amount of the first pass rolling is ≥25mm and the rolling temperature is ≥1060°C, the width of the billet obtained by the nth pass rolling is Wt+(0~40)mm, where Wt is the target width of the unified clad plate, and the rolling temperature of the nth pass is ≥1030°C; between the nth pass and the n+1th pass, and between the n+2th pass and the n+3th pass, the billet is reciprocally water-cooled once in 6 sets of manifolds, wherein the cooling water amount of the upper manifold in each set is 120~180m³/h, the cooling water amount of the lower manifold is 160~220m³/h, and the roller table speed is 0.8~1.2m/s; the rolling reduction amounts from the n+1th pass to the n+3th pass are all ≥40mm, and the rolling temperature of the n+1th pass is ≥950°C; at the m-th pass, the rolling temperature is ≥900°C, and rolling continues until the billet thickness is 2.5~3.5 times the target thickness of the unified clad plate; then water cooling is performed until the surface temperature of the billet drops below 840°C; thereafter, a second stage rolling is performed until the billet thickness reaches the target thickness of the unified clad plate to complete the entire rolling process, wherein the rolling temperature of the first pass in the second stage rolling is 810°C~840°C, and the rolling temperature of the last pass is 780~810°C.

To achieve the above object, an embodiment of the present application provides a stainless steel clad plate for bridge structures, which is prepared by a method comprising process steps of billet preparation, release agent coating, blank assembly, seal welding, vacuumizing, sealing, heating, rolling, cooling, cutting, and leveling; wherein:
in the blank assembly step: a blank assembly is formed by arranging an upper carbon steel base material A, a lower carbon steel base material B, an intermediate layer comprising at least two stainless steel cladding materials, and four sealing strips surrounding four side edges of the intermediate layer, wherein gas shielded welding is performed between the sealing strips and base material A, and between the sealing strips and base material B to form a base blank; wherein the base blank has grooves with a depth of D formed by base material A, sealing strips and base material B on all four side edges, and a circular through hole is formed in the sealing strip on one side edge of the base blank, and a steel pipe with an outer diameter of r is welded in the through hole;
in the seal welding step: overlay welding is performed on the grooves, wherein during overlay welding, a hole concentric with the steel pipe and having a radius R>r is reserved around the steel pipe; the overlay welding is terminated when the penetration depth of the groove on the side edge where the steel pipe is located reaches 2/3 of the groove depth, and the penetration depth of the grooves on other side edges reaches more than 2/3 of the groove depth;
in the sealing step: after the vacuumizing step of the base blank is completed, the steel pipe is heated with a flame gun, flattened, and folded into the reserved hole; then gas shielded welding is performed to fully weld the hole to seal the steel pipe in the hole; thereafter, overlay welding is continued until the grooves are filled, and finally cover welding is performed to obtain a composite blank;
in the rolling step: the composite blank from the heating furnace is rolled to produce a unified clad plate; during the entire rolling process, transverse rolling is adopted for the first n passes, and longitudinal rolling is adopted from the n+1th pass, and the reduction amount of the first pass rolling is ≥25mm and the rolling temperature is ≥1060°C, the width of the billet obtained by the nth pass rolling is Wt+(0~40)mm, where Wt is the target width of the unified clad plate, and the rolling temperature of the nth pass is ≥1030°C; between the nth pass and the n+1th pass, and between the n+2th pass and the n+3th pass, the billet is reciprocally water-cooled once in 6 sets of manifolds, wherein the cooling water amount of the upper manifold in each set is 120~180m³/h, the cooling water amount of the lower manifold is 160~220m³/h, and the roller table speed is 0.8~1.2m/s; the rolling reduction amounts from the n+1th pass to the n+3th pass are all ≥40mm, and the rolling temperature of the n+1th pass is ≥950°C; at the m-th pass, the rolling temperature is ≥900°C, and rolling continues until the billet thickness is 2.5~3.5 times the target thickness of the unified clad plate; then water cooling is performed until the surface temperature of the billet drops below 840°C; thereafter, a second stage rolling is performed until the billet thickness reaches the target thickness of the unified clad plate to complete the entire rolling process, wherein the rolling temperature of the first pass in the second stage rolling is 810°C~840°C, and the rolling temperature of the last pass is 780~810°C;
the chemical composition of the base material layer of the clad plate in mass percentage is: C: 0.03~0.16%, Si: 0.11~0.29%, Mn: 1.31~1.54%, P≤0.018%, S≤0.0030%, Cr: 0.06~0.29%, Ni≤0.24%, Cu≤0.24%, Mo≤0.24%, Nb: 0.011~0.034%, Ti: 0.011~0.019%, Al: 0.030~0.040%, the remainder being Fe and unavoidable impurities;
the chemical composition of the cladding material layer of the clad plate in mass percentage is: C≤0.15%, Si≤1.00%, Mn≤2.00%, P≤0.045%, S≤0.030%, Ni: 6.0~22.0%, Cr: 16.0~26.0%, Mo≤3.0%, the remainder being Fe and unavoidable impurities;
the bonding rate at the composite interface of the clad plate is 100%, and the shear strength is ≥300MPa.

Thus, compared with the prior art, this embodiment of the present application, on one hand, through the blank assembly method, seal welding and sealing method, can ensure that the stainless steel cladding material is enclosed within the base material and sealing strips, which helps guarantee the surface quality of the stainless steel cladding material, and there is no need for groove-cutting blank preparation as in the prior art, resulting in high yield rate. Furthermore, it can achieve vacuum evacuation while avoiding gas leakage and cracking of the composite blank, thereby ensuring interface bonding quality. On the other hand, the combination of blank assembly, seal welding and sealing methods with rolling technology, especially the adoption of novel rolling technology in this field, can ensure temperature uniformity of the composite blank and guarantee effective penetration of the core of the composite blank. Consequently, it not only ensures that the inherent advantages of both base material and cladding material can be realized, but more importantly, also ensures the interface bonding quality between the base material and cladding material.

### BRIEF DESCRIPTION OF THE DRAWINGS

For clear demonstration and explanation, in the various drawings of the present application, certain dimensions of structures or parts are enlarged relative to other structures or parts, therefore, they are only used to illustrate the basic structure of the subject matter of the present application.
Fig. 1 is a flow chart of the preparation method provided by the present application;
Fig. 2 is a schematic diagram of the billet in the composite blank preparation stage of the first embodiment of the present application;
Fig. 3 is a cross-sectional view of the base blank obtained from the seal welding step in the composite blank preparation stage of the first embodiment of the present application, wherein the cross-section passes through the central axis of the steel pipe and is perpendicular to the width direction of the base blank;
Fig. 4 is an enlarged view of the circular area in Fig. 3;
Fig. 5 is another cross-sectional view of the base blank obtained from the seal welding step in the composite blank preparation stage of the first embodiment of the present application, wherein the cross-section passes through the central axis of the steel pipe and is perpendicular to the thickness direction of the base blank;
Fig. 6 is a schematic diagram of the finished single-sided stainless steel clad plate obtained from the first embodiment of the present application;
Fig. 7 is a schematic diagram of the billet in the composite blank preparation stage of the second embodiment of the present application;
Fig. 8 is a cross-sectional view of the base blank obtained from the seal welding step in the composite blank preparation stage of the second embodiment of the present application, wherein the cross-section passes through the central axis of the steel pipe and is perpendicular to the width direction of the base blank;
Fig. 9 is an enlarged view of the circular area in Fig. 8;
Fig. 10 is another cross-sectional view of the base blank obtained from the seal welding step in the composite blank preparation stage of the second embodiment of the present application, wherein the cross-section passes through the central axis of the steel pipe and is perpendicular to the thickness direction of the base blank;
Fig. 11 is a schematic diagram of the finished single-sided stainless steel clad plate obtained from the second embodiment of the present application;
Fig. 12 is a schematic diagram of the billet in the composite blank preparation stage of the third embodiment of the present application;
Fig. 13 is a cross-sectional view of the base blank obtained from the seal welding step in the composite blank preparation stage of the third embodiment of the present application, wherein the cross-section passes through the central axis of the steel pipe and is perpendicular to the width direction of the base blank;
Fig. 14 is an enlarged view of the circular area in Fig. 13;
Fig. 15 is another cross-sectional view of the base blank obtained from the seal welding step in the composite blank preparation stage of the third embodiment of the present application, wherein the cross-section passes through the central axis of the steel pipe and is perpendicular to the thickness direction of the base blank;
Fig. 16 is a schematic diagram of the finished single-sided stainless steel clad plate obtained from the third embodiment of the present application;
Fig. 17 is a schematic diagram of the billet in the composite blank preparation stage of the fourth embodiment of the present application;
Fig. 18 is a cross-sectional view of the base blank obtained from the seal welding step in the composite blank preparation stage of the fourth embodiment of the present application, wherein the cross-section passes through the central axis of the steel pipe and is perpendicular to the width direction of the base blank;
Fig. 19 is an enlarged view of the circular area in Fig. 18;
Fig. 20 is another cross-sectional view of the base blank obtained from the seal welding step in the composite blank preparation stage of the fourth embodiment of the present application, wherein the cross-section passes through the central axis of the steel pipe and is perpendicular to the thickness direction of the base blank;
Fig. 21 is a schematic diagram of the finished single-sided stainless steel clad plate obtained from the fourth embodiment of the present application;
Fig. 22 is a schematic diagram of the billet in the composite blank preparation stage of the fifth embodiment of the present application;
Fig. 23 is a cross-sectional view of the base blank obtained from the seal welding step in the composite blank preparation stage of the fifth embodiment of the present application, wherein the cross-section passes through the central axis of the steel pipe and is perpendicular to the width direction of the base blank;
Fig. 24 is an enlarged view of the circular area in Fig. 23;
Fig. 25 is another cross-sectional view of the base blank obtained from the seal welding step in the composite blank preparation stage of the fifth embodiment of the present application, wherein the cross-section passes through the central axis of the steel pipe and is perpendicular to the thickness direction of the base blank;
Fig. 26 is a schematic diagram of the finished single-sided stainless steel clad plate obtained from the fifth embodiment of the present application.

### DETAILED DESCRIPTION

An embodiment of the present application provides a preparation method of a single-sided stainless steel composite plate for a bridge structure, and provides a single-sided stainless steel composite plate for a bridge structure, wherein the composite plate is prepared by the preparation method of an embodiment of the present application.

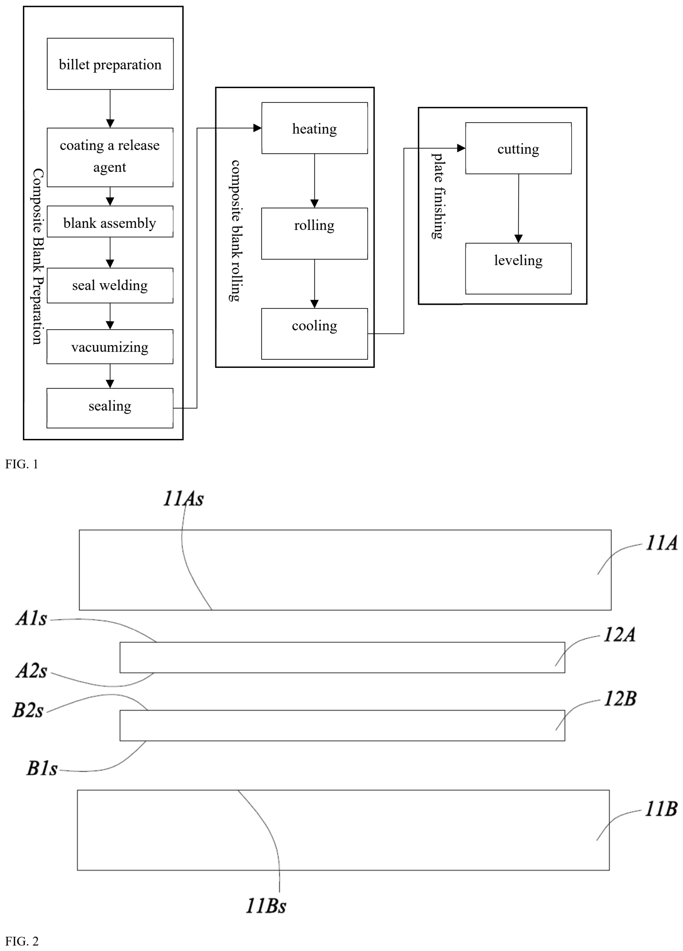

Specifically, as shown in Fig. 1, the preparation method comprises a process flow of billet preparation process, coating a release agent process, blank assembly process, seal welding process, vacuumizing process, sealing process, heating process, rolling process, cooling process, cutting process, and leveling process. That is, the present application obtains a single-sided stainless steel composite plate through a process route of billet preparation-coating a release agent-blank assembly-seal welding-vacuumizing-sealing-heating-rolling-cooling-cutting-leveling.

Among them, a composite blank is prepared through the billet preparation process, coating a release agent process, blank assembly process, seal welding process, vacuumizing process, and sealing process, thus the stage from the billet preparation process to the sealing process is referred to as a composite blank preparation stage in the present application; then, through the heating process, rolling process, and cooling process, the composite blank is processed into a unified clad plate, thus the stage from the heating process to the cooling process is referred to as a composite blank rolling stage in the present application; finally, through the cutting process and leveling process, the unified clad plate is processed into at least two single-sided stainless steel clad sub-plates, that is, finished single-sided stainless steel composite plates, thus this stage is referred to as a plate finishing stage in the present application.

Further, the present application provides multiple embodiments of the composite blank preparation stage, which are described in detail below.

### <First Embodiment of Composite Blank Preparation Stage>

Referring to Figs. 2 to 6, a first embodiment of the composite blank preparation stage is shown.

In this embodiment, referring to Fig. 2, the billet preparation process specifically comprises:
preparing two carbon steel billets with a thickness T1, length L1, and width W1, as two base materials, which are distinguished as base material 11A and base material 11B in Fig. 2;
polishing the bonding surfaces of each base material, such as surface 11As of base material 11A and surface 11Bs of base material 11B, to remove surface oxide scale and expose metallic luster; after such surface grinding treatment, the roughness Ra of the bonding surfaces is <5µm;
preparing two stainless steel billets with a thickness T2, length L2, and width W2, as two cladding materials, which are distinguished as cladding material 12A and 12B in Fig. 2;
polishing the bonding surfaces of each cladding material, such as surface A1s of cladding material 12A and surface B1s of cladding material 12B, to remove surface oxide scale and expose metallic luster; after such surface grinding treatment, the roughness Ra of the bonding surfaces is <5µm.

Wherein, L2<L1, W2<W1, the length and width dimensions of the cladding materials are both smaller than those of the base materials. More preferably, L1≥2500mm, W2≥1600mm, T1≥60mm; L1-L2 ranges from 90 to 150mm, and W1-W2 also ranges from 90 to 150mm.

It can be understood that, in this embodiment, each base material is a uniform-thickness billet with a constant thickness of T1, correspondingly, the base material layer (obtained from the base material through the preparation method) of the stainless steel composite plate based on this embodiment has a constant thickness.

Here, the "bonding surface" refers to the surface where the base material and cladding material need to form an interface bonding when forming the composite plate. For example, for a pair of base material and cladding material, either one of their two surfaces in the thickness direction is selected as the bonding surface for interface bonding in subsequent steps, for example, surface 11As of base material 11A forms interface bonding with surface A1s of cladding material 12A in subsequent steps, and surface 11Bs of base material 11B forms interface bonding with surface B1s of cladding material 12B in subsequent steps.

Preferably, for surface 11As of base material 11A and surface 11Bs of base material 11B, a grinding wheel, belt grinder, or milling machine is respectively used for polishing to remove surface oxide scale and expose metallic luster. For surface A1s of cladding material 12A and surface B1s of cladding material 12B, a wire wheel is respectively used for polishing to remove surface oxide scale and expose metallic luster.

Here, only the surface grinding treatment of the bonding surfaces of each base material and cladding material is described, and it should be noted that surface grinding treatment can be further performed on other surfaces of each base material and cladding material, although such additional surface grinding treatment of other surfaces is not necessary for achieving the technical effect of the present application but may be more advantageous.

Further, in this embodiment, the coating a release agent process specifically comprises: coating a release agent on the non-bonding surface of at least one cladding material. Specifically, a release agent can be coated on the non-bonding surface of each cladding material, the non-bonding surface such as surface A2s of cladding material 12A and surface B2s of cladding material 12B, or one of the two cladding materials can be selected for coating the release agent. In this way, the release agent prevents the two cladding materials from bonding together during the subsequent composite blank rolling step, which would make the final cutting difficult.

It can be understood that the non-bonding surface is opposite to the bonding surface of the cladding material, and the two surfaces constitute two surfaces of the cladding material in the thickness direction.

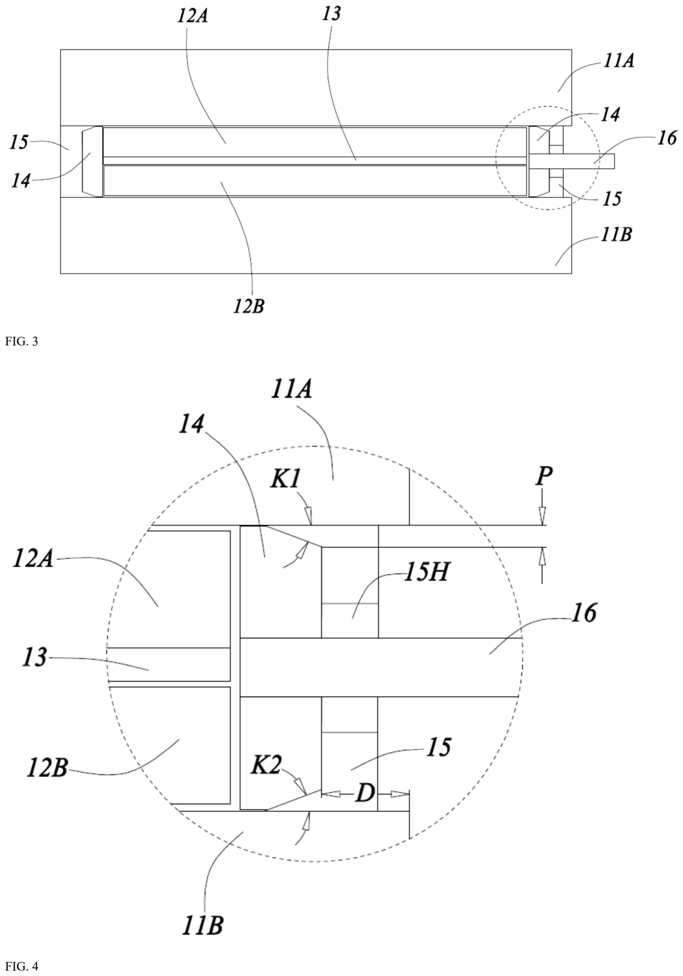

Regarding the composition of the release agent, the first optional scheme is: a coating liquid containing silicon oxide and magnesium oxide, wherein the mass ratio of silicon oxide to magnesium oxide is 3:1. The release agent in this embodiment can achieve good isolation effect, ensuring the subsequent separation of two clad sub-plates. Using this release agent, the total amount of release agent 13 (as shown in Fig. 3) between the two cladding materials is 20y mg/m², where y is the ratio of the thickness of the composite blank obtained in the composite blank preparation step to the thickness of the unified clad plate after subsequent rolling, which is also called the compression ratio of composite blank rolling. Here, the preparation method of the release agent is provided: mixing polyvinyl alcohol and thermosetting phenolic resin in a mass ratio of 1:1 to obtain binder powder; mixing silicon oxide and magnesium oxide in a mass ratio of 3:1 to obtain release agent powder; mixing the release agent powder, binder powder and water in a mass ratio of 27:3:70 to obtain fluid release agent coating liquid. After coating the release agent and before the subsequent blank assembly process, the cladding material coated with release agent is placed in a car furnace for heating and drying, with a drying temperature of 340~360°C and a drying time of 35~45min.

Regarding the composition of the release agent, the second optional scheme is: components with weight ratios of 25~35% silicon nitride + 5~10% thermosetting amino resin + 55~70% water. Compared with existing release agents, and even with the first embodiment of the aforementioned release agent, the release agent in this embodiment not only can achieve good isolation effect, ensuring the subsequent separation of two clad sub-plates, but also the effective component silicon nitride has strong chemical stability and high temperature resistance, thermal shock resistance, and the thermosetting amino resin used as binder can cure at low temperature, is non-toxic, and can achieve strong bonding effect with small amount, therefore overall it is inexpensive, simple to operate, with good isolation and adhesion effects.

Here, a preferred preparation method for the release agent of the second optional scheme is provided, including: first placing 5~10% silicon nitride (by weight percentage) in a container such as a beaker, then pouring in 15~25% water for stirring; after the silicon nitride shows no particle sensation and no bubbles, pour in 2~3% thermosetting amino resin and continue stirring; when it becomes viscous, continue to pour in the remaining silicon nitride and water, stir for 3~5min then pour in the remaining thermosetting amino resin; when stirred to a viscous state, the release agent is prepared.

For the release agent of the second optional scheme, the total amount of release agent 13 (as shown in Fig. 3) between the two cladding materials is coated with a thickness of 0.2~0.5mm; after coating the release agent and before the subsequent blank assembly process, the cladding material coated with release agent is heated and dried at a drying temperature of 100~250°C for 20~40min. Here, it should be noted that in the drawings of this application, for better understanding and explanation, the thickness dimension of the release agent 13 between the two cladding materials has been enlarged for illustration, that is, the thickness of release agent 13 shown in the Fig. has been enlarged in proportion to the base material thickness, cladding material thickness, and the sealing strip width mentioned later.

As mentioned above, for the first and second optional schemes of the release agent, if the release agent is coated on both surface A2s of cladding material 12A and surface B2s of cladding material 12B, the amount of release agent coated on each of surface A2s and surface B2s can be half of the total amount; if the release agent is coated on only one of surface A2s and surface B2s, then coat according to the total amount.

Further, referring to Fig. 3, the blank assembly process specifically comprises: assembling the blank with cladding materials 12A and 12B as the middle layer, base material 11A stacked on top, base material 11B stacked at the bottom, and four sealing strips 14 surrounding the four sides of the middle layer, and performing gas-shielded welding between the upper edge of sealing strips 14 and base material 11A, and between the lower edge of sealing strips 14 and base material 11B, to form a base blank.

Specifically, in an optional embodiment, base material 11A, cladding materials 12A and 12B, and base material 11B can be stacked first, then sealing strips 14 are wrapped around the four sides of cladding materials 12A and 12B, and finally gas-shielded welding is performed between the upper edge of sealing strips 14 and surface 11As of base material 11A, and between the lower edge of sealing strips 14 and surface 11Bs of base material 11B. Of course, in a variant embodiment, gas-shielded welding can be performed first between the lower edge of sealing strips 14 and surface 11Bs of base material 11B to form a quadrilateral frame of sealing strips 14 on surface 11Bs of base material 11B, then cladding materials 12B and 12A are placed in sequence within the frame, then base material 11A covers cladding material 12A and the frame, and finally gas-shielded welding is performed between the upper edge of sealing strips 14 and surface 11As of base material 11A. In another variant embodiment, gas-shielded welding can be performed between the upper edge of sealing strips 14 and surface 11As of base material 11A first, then base material 11B, cladding material 12B, cladding material 12A are stacked from bottom to top in sequence, then the combined sealing strips 14 and base material 11A cover above and around cladding materials 12A and 12B, and finally gas-shielded welding is performed between the lower edge of sealing strips 14 and surface 11Bs of base material 11B. These embodiments have not deviated from the inventive concept of the present application.

Further preferably, in the blank assembly process, when base material 11A, cladding materials 12A and 12B, base material 11B are stacked, and before the upper edge or lower edge of sealing strips 14 is welded to the base material, place the stacked steel materials as a whole under a four-column hydraulic machine, and apply pressure to the opposite surfaces of the two base materials (that is, the upper surface of base material 11A and the lower surface of base material 11B), with pressure ≥500 tons. Thus, adjacent steel billets can contact more tightly.

Preferably, in the blank assembly process, when performing gas-shielded welding between the edges of sealing strips 14 and base materials, the welding current is 220~240A, welding voltage is 28~32V, welding speed is 300~360mm/min, and interpass temperature is controlled at 140~160°C. Additionally, before performing gas-shielded welding, it is preferred to preheat base materials 11A and 11B with a flame gun at a heating temperature of 150~250°C.

In this embodiment, referring to Fig. 3, in the middle layer, cladding materials 12A and 12B are stacked up and down, and sealing strips 14 wrap around the four sides of cladding materials 21 and 22.

It can be understood that in the base blank obtained from the blank assembly process, surface 11As of base material 11A and surface A1s of cladding material 12A face each other and contact as bonding surfaces, surface 11Bs of base material 11B and surface B1s of cladding material 12B face each other and contact as bonding surfaces, surface A2s of cladding material 12A and surface B2s of cladding material 12B face each other and contact as non-bonding surfaces.

Further, the obtained base blank has grooves on all four sides formed by base material 11A, sealing strips 14, and base material 11B. Preferably, the depths of the grooves on the four sides of the base blank are preferably set to be the same, as shown as depth D in Fig. 4, with a value range of 40~60mm. Through the control of depth D, it can not only effectively prevent weld seam cracking during composite blank rolling, but also avoid deep penetration during subsequent seal welding that forms welding hot cracks, thereby affecting the seal welding quality of the composite blank.

It can be understood that the groove depth depends on the length and width dimension differences between cladding materials and base materials, and the thickness of sealing strips 14. For example, during the blank assembly process, cladding materials are centrally placed relative to base materials, the distance from the two sides (i.e., long sides) of cladding materials in the transverse direction (i.e., width direction) to the corresponding two sides (i.e., long sides) of base materials is equal, this distance is 45~75mm, the distance from the two sides (i.e., short sides) of cladding materials in the longitudinal direction (i.e., length direction) to the corresponding two sides (i.e., short sides) of base materials is also equal, this distance is 45~75mm; the thickness T3 of sealing strips is 10~15mm, the groove depth D of the long sides of the base blank is (W1-W2-2T3)/2, the groove depth D of the short sides is (L1-L2-2T3)/2.

Additionally, regarding the overall dimensions of the four sealing strips 14, at the long sides of the base blank, the length L31 of sealing strips 14 is L2~L2-2mm, while at the short sides of the base blank, the length L32 of sealing strips 14 is W2~W2-2mm; the width W3 of sealing strips 14 is 2T2~2T2-2mm; the thickness T3 is 10~15mm as mentioned before. Preferably, the width W3 and thickness T3 of sealing strips 14 on the four sides of the base blank are the same. Of course, this is not limited to this. It should be noted here that, as mentioned before, for better understanding and explanation, the thickness dimension of release agent 13 has been enlarged for illustration in Fig. 3, correspondingly, the width of sealing strips 14 shown in Figs. 3 and 4 is displayed larger than the sum of the thicknesses of the two cladding materials, but this is merely due to the enlarged illustration of the release agent 13 thickness, in reality, the width W3 of sealing strips 14 is consistent with or approximately 2mm less than the sum of the thicknesses of cladding materials 12A and 12B.

More preferably, referring to Fig. 4, bevels are formed on both upper and lower edges of the outer surface of sealing strips 14, and the bevel angle is 10~20°, with a vertical depth P of 10~15mm. Here, "the outer surface of sealing strips 14" refers to the surface of sealing strips 14 facing away from cladding materials 12A and 12B. In other words, bevels are formed on the upper and lower edges of one surface of sealing strips 14, and in the blank assembly process, sealing strips 14 are combined with base materials 11A, 11B and cladding materials 12B, 12A with this "one surface" with bevels facing outward. Through beveling, it not only avoids spot welding on the inner side of sealing strips, avoiding thermal effects on base materials due to multiple welding passes, but also facilitates subsequent seal welding of bevels, ensuring firmness.

Referring to Fig. 4, the bevel angle K1 at the upper edge and bevel angle K2 at the lower edge of the outer surface of sealing strips 14 are respectively 10~20°, which can be the same or different.

Further, a circular through hole is formed on the sealing strip at one side of the base blank, and in this blank assembly process, a steel pipe 16 with an outer diameter of r is welded in the through hole. The through hole can be machined either before gas-shielded welding of sealing strips 14 with base materials 11A, 11B, or after gas-shielded welding is completed to form the base blank. These all do not deviate from the technical concept of this application.

Preferably, the diameter of the through hole is consistent with the outer diameter of steel pipe 16, both being r.

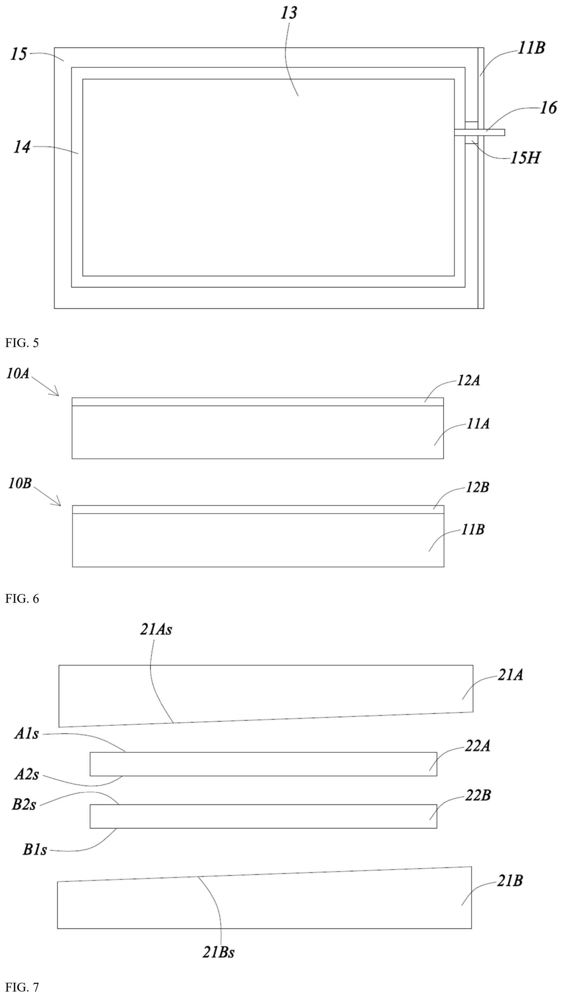

More preferably, as shown in Fig. 5, the through hole is formed on sealing strip 14 at one short side of the base blank, and the through hole is centered at a position of 1/3 length (i.e., 1/3 of L32) and 1/2 width (i.e., 1/2 of W3) of the sealing strip 14; referring to Fig. 4, the end face of steel pipe 16 is flush with the inner surface of the sealing strip 14. This ensures the effectiveness of vacuumizing.

Preferably, the length of steel pipe 16 ranges from T3+2D to T3+2D+R.

Further, in this embodiment, the seal welding process specifically comprises:
performing build-up welding on the grooves of the four sides of the base blank, specifically such as using submerged arc build-up welding; and during the build-up welding process, referring to Figs. 4 and 5, reserving a cavity 15H around steel pipe 16 that is concentric with steel pipe 16 and has a radius R>r;
stopping the build-up welding when the weld penetration depth reaches 2/3 of the groove depth on the side with steel pipe 16, and exceeds 2/3 of the groove depth on other sides, for example, in embodiments where the groove depths on all four sides are D, that is, when the weld penetration depth reaches 2/3D on the side with steel pipe 16 and exceeds 2/3D on other sides.

It can be understood that outside the frame formed by sealing strips 14, a quadrilateral frame-shaped filling layer is formed through build-up welding, referring to Figs. 3~5, where the filling layer formed by build-up welding is marked as 15.

More preferably, the seal welding process ends when the weld penetration depth reaches 2/3 of the groove depth on the side with steel pipe 16, and reaches the full groove depth on other sides, for example, in embodiments where the groove depths on all four sides are D, that is, when the weld penetration depth reaches 2/3D on the side with steel pipe 16 and reaches D on other sides. In this way, the grooves on the other three sides are completely filled by build-up welding, which not only ensures no air leakage during vacuumizing but also facilitates completely sealing the vacuum pipe in the groove later, further ensuring the airtightness of the composite blank.

Further, during the build-up welding process, multiple layers and passes are performed in the order of upper and lower edges first, followed by the middle area, which not only allows sufficient dissipation of heat generated during welding but also prevents burning through the sealing strips; each layer has more than 4 welding passes, with an interpass temperature of 140~160°C, total number of welding layers is 6~8, with an interlayer temperature of 150~250°C, which not only effectively improves the strength of welded joints but also reduces the impact of welding on the organizational properties of base materials and cladding materials.

Additionally, before build-up welding, the welding flux is pre-baked and kept warm for standby use, with a baking temperature of 300~350°C, baking time of 90~120min, and holding temperature of 100~150°C.

Preferably, during build-up welding, the welding current is 550~650A, welding voltage is 28~32V, and welding speed is 400~500mm/min.

Further, after stopping the build-up welding as mentioned before, vacuumizing is performed on the base blank, followed by sealing. The vacuumizing process can be implemented using existing known technology, and this embodiment provides a preferred scheme, specifically, this preferred vacuumizing process includes: performing three vacuum extractions and two vacuum breakings on the internal space of the base blank through the steel pipe, finally maintaining the vacuum degree of the internal space of the base blank at ≤10⁻²Pa.

More preferably, the vacuumizing process includes:
first connecting the steel pipe to a vacuum pump to perform vacuumizing on the internal space of the base blank, with vacuum degree ≤10⁻²Pa, then maintaining pressure for more than 4h; next connecting the steel pipe to a nitrogen supply device to break vacuum and fill with nitrogen gas;
then, reconnecting the steel pipe to the vacuum pump to perform vacuumizing on the base blank, with vacuum degree ≤10⁻¹Pa, without pressure holding; next reconnecting the steel pipe to the nitrogen supply device to break vacuum and fill with nitrogen gas;
finally, connecting the steel pipe to the vacuum pump for the third time to perform vacuumizing on the base blank, with vacuum degree ≤10⁻²Pa, then proceeding directly to the sealing process without pressure holding.

Further, the sealing process specifically includes: heating and flattening steel pipe 16 with a flame gun, then folding it into the reserved cavity 15H; then using gas-shielded welding to fully weld the cavity, sealing steel pipe 16 in cavity 15H; next, continuing build-up welding until the groove on the side with steel pipe 16 is completely filled, finally performing cover pass welding to obtain the composite blank.

Thus, through the blank assembly, seal welding, and sealing steps of the present application, by reserving cavity 15H at the weld seam, it increases the disposal space for steel pipe 16, reduces the difficulty of seal welding, improves seal welding efficiency, prevents air leakage during sealing, prevents steel pipe 16 from falling off due to collision, and overall ensures the airtightness of the composite blank; thereby, preventing cracking and air leakage during rolling; consequently, the prepared composite plate has excellent interface bonding and reduces production costs.

It can be understood that the structural shape of the final stainless steel composite plate is affected by the billet shape dimensions and blank assembly method prepared in the composite blank preparation stage.

As shown in Fig. 6, in this embodiment, based on the uniform-thickness base materials prepared in the billet preparation process and the middle layer arrangement of stacked cladding materials 12A and 12B in the blank assembly process, the composite blank based on this embodiment, after subsequent composite blank rolling stage and plate finishing stage, produces two stainless steel composite plates, both having constant base material layer thickness and consistent length and width dimensions between cladding layer and base material layer.

For example, the obtained stainless steel composite plate 10A, its base material layer 11A and cladding layer 12A are respectively derived from the aforementioned base material 11A and cladding material 12A through rolling, thus retaining the original numbering of base material 11A and cladding material 12A, base material layer 11A is uniform-thickness carbon steel material, cladding layer 12A is stainless steel material, and cladding layer 12A and base material layer 11A have consistent length and width dimensions.

For another example, the obtained stainless steel composite plate 10B, its base material layer 11B and cladding layer 12B are respectively derived from the aforementioned base material 11B and cladding material 12B through rolling, thus retaining the original numbering of base material 11B and cladding material 12B, base material layer 11B is uniform-thickness carbon steel material, cladding layer 12B is stainless steel material, and cladding layer 12B and base material layer 11B have consistent length and width dimensions.

In summary, a single-sided stainless steel composite plate is provided, which is prepared from the composite blank of this embodiment through the composite blank rolling stage and plate finishing stage. The composite plate is a fully covered uniform-thickness plate with a total thickness of 5~55mm, base material layer thickness of 4~45mm, and cladding layer thickness of 1~10mm.

The above provides detailed explanation of each process in the composite blank preparation stage of this embodiment. In multiple test examples provided later, test examples 1~3 use this embodiment to prepare composite blanks and use the prepared composite blanks to prepare stainless steel composite plates. Here, Table 1 shows some parameters of the composite blanks in these examples, where the parameters indicated by the symbols refer to the previous introduction.

**Table 1**

| | Base Material | | | | Base Material | | | |
|---|---|---|---|---|---|---|---|---|
| | Steel Grade | L1, mm | W1, mm | T1, mm | Steel Grade | L2, mm | W2, mm | T2, mm |
| Example 1 | Q345 | 2700 | 2000 | 168 | 316L | 2580 | 1880 | 21 |
| Example 2 | Q345 | 2400 | 1580 | 48 | 316L | 2280 | 1400 | 12 |
| Example 3 | Q500 | 2700 | 2000 | 112 | 316L | 2580 | 1880 | 21 |

### <Second Embodiment of Composite Blank Preparation Stage>

Referring to Figs. 7 to 11, a second embodiment of the composite blank preparation stage is shown. This embodiment differs from the first embodiment of the composite blank preparation stage mentioned above only in: the shape of base materials prepared in the billet preparation process is different. While the coating a release agent process, blank assembly process, seal welding process, vacuumizing process, and sealing process are the same as in the first embodiment. Below, only the different billet preparation process will be described in detail, other aspects can be understood in combination with the drawings and the first embodiment of the composite blank preparation stage mentioned above, without redundant description.

In this embodiment, referring to Fig. 7, the billet preparation process specifically comprises:
preparing two carbon steel billets with length L1, width W1, and thickness varying along X direction, as two base materials, which are distinguished as base material 21A and base material 21B in Fig. 7;
polishing the bonding surfaces of each base material, such as surface 21As of base material 21A and surface 21Bs of base material 21B, to remove surface oxide scale and expose metallic luster; after such surface grinding treatment, the roughness Ra of the bonding surfaces is <5µm;
preparing two stainless steel billets with thickness T2, length L2, and width W2, as two cladding materials, which are distinguished as cladding material 22A and 22B in Fig. 7;
polishing the bonding surfaces of each cladding material, such as surface A1s of cladding material 22A and surface B1s of cladding material 22B, to remove surface oxide scale and expose metallic luster; after such surface grinding treatment, the roughness Ra of the bonding surfaces is <5µm.

Wherein, L2<L1, W2<W1, the length and width dimensions of the cladding materials are both smaller than those of the base materials. More preferably, L1≥2500mm, W2≥1600mm; L1-L2 ranges from 90 to 150mm, and W1-W2 also ranges from 90 to 150mm.

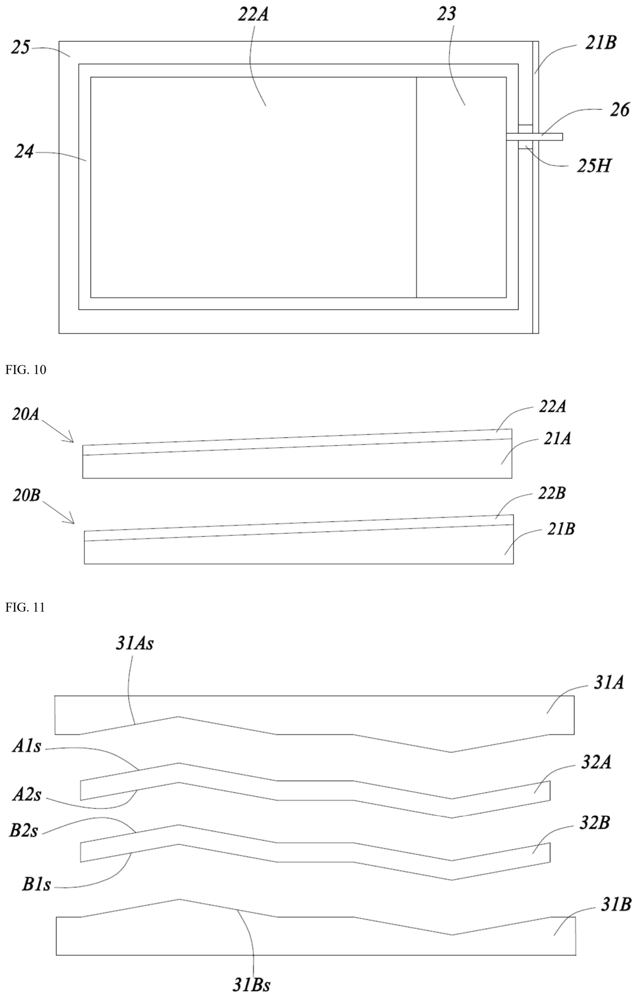

Moreover, base materials 21A and 21B are carbon steel billets with thickness varying along X direction, that is, they are not billets with constant thickness, but rather their thickness varies along the X direction. Here, the X direction refers to the width direction or length direction of the base materials, in the embodiment shown in Fig. 10, the X direction is shown as the length direction of the base materials.

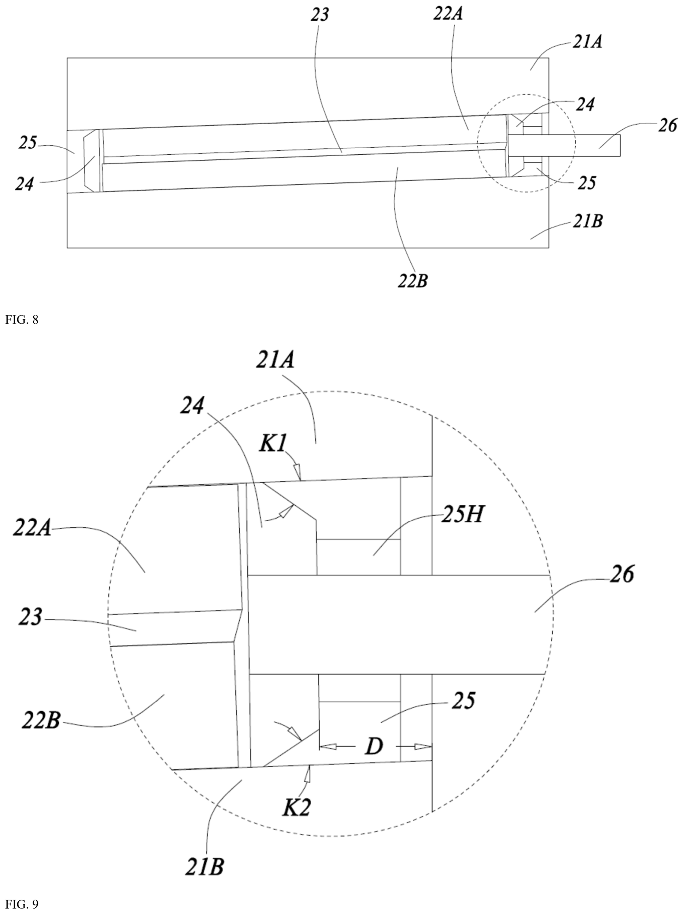

More preferably, bonding surface 21As of base material 21A and bonding surface 21Bs of base material 21B are mutually complementary, that is, when these two surfaces face each other, they complement each other, this complementarity makes the non-bonding surface (i.e., the upper surface of base material 21A in Fig. 7) of base material 21A and the non-bonding surface (i.e., the lower surface of base material 21B in Fig. 7) of base material 21B parallel. Correspondingly, as shown in Fig. 8, in the base blank prepared in the subsequent blank assembly process, the upper surface of base material 21 A and the lower surface of base material 21B are in a parallel state. From another perspective, bonding surface 21As of base material 21 A and bonding surface 21Bs of base material 21B are mutually complementary, that is, when bonding surface 21As of base material 21A and bonding surface 21Bs of base material 21B are fitted together up and down, they can perfectly match surface to surface, in other words, when bonding surface 21As of base material 21A and bonding surface 21Bs of base material 21B are fitted together up and down, the sum of the thicknesses of base material 21A and base material 21B remains constant.

In the embodiment shown in the drawings, base materials 21A and 21B are both non-uniform thickness plates with thickness monotonically varying along X direction, bonding surface 21As of base material 21A and bonding surface 21Bs of base material 21B are both inclined planes. The inclination angle of bonding surface 21As (for example, the angle with the said non-bonding surface of base material 21A) equals the inclination angle of bonding surface 21Bs (for example, the angle with the said non-bonding surface of base material 21B).

It can be understood that the structural shape of the final stainless steel composite plate is affected by the billet shape dimensions and blank assembly method prepared in the composite blank preparation stage.

In this embodiment, as shown in Fig. 11, based on the base materials with monotonically varying thickness along X direction prepared in the billet preparation process and the middle layer arrangement of stacked cladding materials 22A and 22B in the blank assembly process, the composite blank based on this embodiment, after subsequent composite blank rolling stage and plate finishing stage, produces two stainless steel composite plates, both having base material layer with monotonically varying thickness along X direction and flush edges between cladding layer and base material layer on all four sides.

For example, as shown in Fig. 11, in the obtained stainless steel composite plate 20A, its lower carbon steel base material layer 21A and upper stainless steel cladding layer 22A are respectively derived from the aforementioned base material 21A and cladding material 22A through rolling, thus retaining the original numbering of base material 21A and cladding material 22A. Among them, base material layer 21A has varying thickness along X direction, specifically, monotonically varying thickness along X direction, more specifically, the upper surface of base material layer 21 A is an inclined plane relative to the lower surface of base material layer 21A. The four sides of cladding layer 22A and base material layer 21A are flush with each other, and cladding layer 22A perfectly covers the entire upper surface of base material layer 21A.

For another example, as shown in Fig. 11, in the obtained stainless steel composite plate 20B, its lower carbon steel base material layer 21B and upper stainless steel cladding layer 22B are respectively derived from the aforementioned base material 21B and cladding material 22B through rolling, thus retaining the original numbering of base material 21B and cladding material 22B. Among them, base material layer 21B has varying thickness along X direction, specifically, monotonically varying thickness along X direction, more specifically, the upper surface of base material layer 21B is an inclined plane relative to the lower surface of base material layer 21B. The four sides of cladding layer 22B and base material layer 21B are flush with each other, and cladding layer 22B perfectly covers the entire upper surface of base material layer 21B.

In summary, a single-sided stainless steel composite plate is provided, which is prepared from the composite blank of this embodiment through the composite blank rolling stage and plate finishing stage. The composite plate is a fully covered, non-uniform thickness plate with monotonically varying thickness along X direction, having a total thickness of (5~47)~(7~55)mm, base material layer thickness of (4~37)~(6~45)mm, and cladding layer thickness of 1~10mm.

The above provides detailed explanation of each process in the composite blank preparation stage of this embodiment. In multiple test examples provided later, test examples 4~6 use this embodiment to prepare composite blanks and use the prepared composite blanks to prepare stainless steel composite plates. Here, Table 2 shows some parameters of the composite blanks in these examples, where the parameters indicated by the symbols refer to the previous introduction.

**Table 2**

| | Base Material | | | | Base Material | | | |
|---|---|---|---|---|---|---|---|---|
| | Steel Grade | L1, mm | W1, mm | thickness, mm | Steel Grade | L2, mm | W2, mm | T2, mm |
| Example 4 | Q345 | 2700 | 2100 | 196-252 | 316L | 2580 | 1980 | 21 |
| Example 5 | Q345 | 2700 | 2100 | 140-196 | 316L | 2580 | 1980 | 21 |
| Example 6 | Q370 | 2700 | 2100 | 112~168 | 316L | 2580 | 1980 | 21 |

### <Third Embodiment of Composite Blank Preparation Stage>

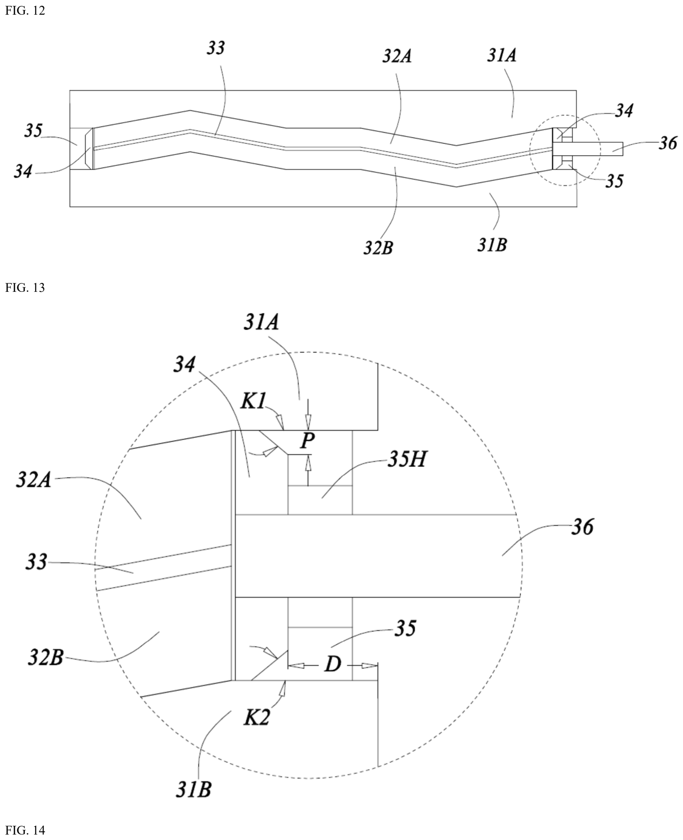

Referring to Figs. 12 to 16, a third embodiment of the composite blank preparation stage is shown. This embodiment differs from the first embodiment of the composite blank preparation stage mentioned above only in: the shape of base materials prepared in the billet preparation process is different. While the coating a release agent process, blank assembly process, seal welding process, vacuumizing process, and sealing process are the same as in the first embodiment. Below, only the different billet preparation process will be described in detail, other aspects can be understood in combination with the drawings and the first embodiment of the composite blank preparation stage mentioned above, without redundant description.

In this embodiment, referring to Fig. 12, the billet preparation process specifically comprises:
preparing two carbon steel billets with length L1, width W1, and thickness varying along X direction, as two base materials, which are distinguished as base material 31A and base material 31B in Fig. 12;
polishing the bonding surfaces of each base material, such as surface 31As of base material 31A and surface 31Bs of base material 31B, to remove surface oxide scale and expose metallic luster; after such surface grinding treatment, the roughness Ra of the bonding surfaces is <5µm;
preparing two stainless steel billets with thickness T2, length L2, and width W2, as two cladding materials, which are distinguished as cladding material 32A and 32B in Fig. 7;
polishing the bonding surfaces of each cladding material, such as surface A1s of cladding material 32A and surface B1s of cladding material 32B, to remove surface oxide scale and expose metallic luster; after such surface grinding treatment, the roughness Ra of the bonding surfaces is <5µm.

Wherein, L2<L1, W2<W1, the length and width dimensions of the cladding materials are both smaller than those of the base materials. More preferably, L1≥2500mm, W2≥1600mm; L1-L2 ranges from 90 to 150mm, and W1-W2 also ranges from 90 to 150mm.

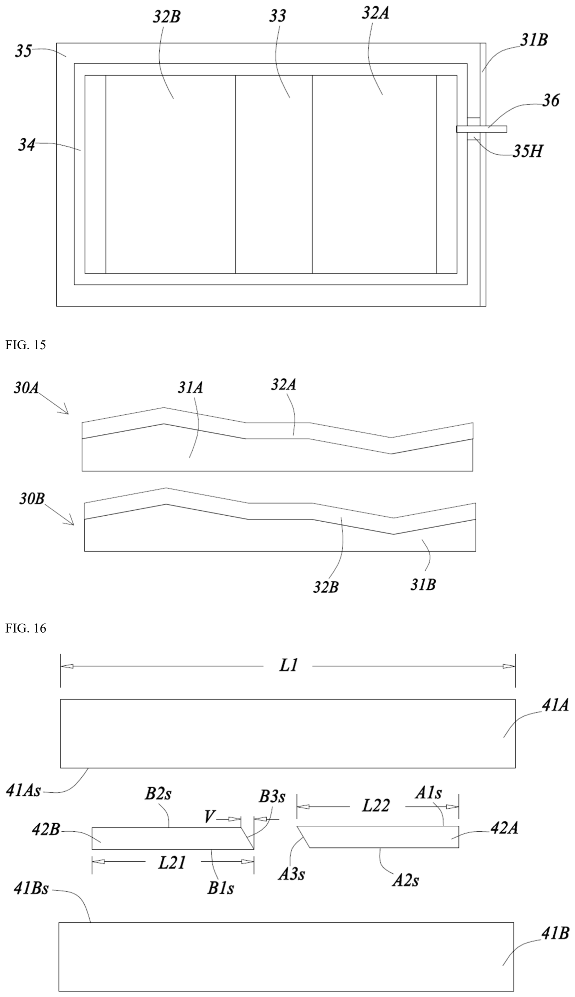

Moreover, base materials 31A and 31B are carbon steel billets with thickness varying along X direction, that is, they are not billets with constant thickness, but rather their thickness varies along the X direction. Here, the X direction refers to the width direction or length direction of the base materials, in the embodiment shown in Fig. 15, the X direction is shown as the length direction of the base materials.

More preferably, bonding surface 31As of base material 31A and bonding surface 31Bs of base material 31B are mutually complementary, that is, when these two surfaces face each other, they complement each other, this complementarity makes the non-bonding surface (i.e., the upper surface of base material 31A in Fig. 13) of base material 31A and the non-bonding surface (i.e., the lower surface of base material 31B in Fig. 13) of base material 31B parallel. Correspondingly, as shown in Fig. 13, in the base blank prepared in the subsequent blank assembly process, the upper surface of base material 31A and the lower surface of base material 31B are in a parallel state. From another perspective, bonding surface 31As of base material 31A and bonding surface 31Bs of base material 31B are mutually complementary, that is, when bonding surface 31As of base material 31A and bonding surface 31Bs of base material 31B are fitted together up and down, they can perfectly match surface to surface, in other words, when bonding surface 31As of base material 31A and bonding surface 31Bs of base material 31B are fitted together up and down, the sum of the thicknesses of base material 31A and base material 31B remains constant.

In the embodiment shown in the drawings, base materials 31A and 31B are both non-uniform thickness plates with non-monotonically varying thickness along X direction, bonding surface 31As of base material 31A and bonding surface 31Bs of base material 31B both include two or more planes arranged along X direction.

For example, in Fig. 12, bonding surface 31As of base material 31A and bonding surface 31Bs of base material 31B both have 7 planes. Taking bonding surface 31Bs of base material 31B as an example, from left to right in Fig. 12, there are a horizontal plane, an upward inclined plane, a downward inclined plane, a horizontal plane, a downward inclined plane, an upward inclined plane, and a horizontal plane. Of course, the specific shapes of bonding surface 31As of base material 31A and bonding surface 31Bs of base material 31B shown in the Fig. are just examples, and the number of inclined planes contained in each is not limited to what is shown in the drawings.

Additionally, in this embodiment, the shape of each cladding material prepared in the billet preparation process matches the bonding surface of its corresponding base material, for example, the shape of cladding material 32A matches bonding surface 31As of base material 31A, and the shape of cladding material 32B matches bonding surface 31Bs of base material 31B. Specifically, uniform-thickness stainless steel billets can be subjected to bending treatment to obtain cladding materials with shapes matching the bonding surfaces of their corresponding base materials.

Similarly, it can be understood that the structural shape of the final stainless steel composite plate is affected by the billet shape dimensions and blank assembly method prepared in the composite blank preparation stage.

In this embodiment, as shown in Fig. 16, based on the base materials with non-monotonically varying thickness along X direction prepared in the billet preparation process and the middle layer arrangement of stacked cladding materials 32A and 32B in the blank assembly process, the composite blank based on this embodiment, after subsequent composite blank rolling stage and plate finishing stage, produces two stainless steel composite plates, both having base material layer with non-monotonically varying thickness along X direction and flush edges between cladding layer and base material layer on all four sides.

For example, as shown in Fig. 16, in the obtained stainless steel composite plate 30A, its lower carbon steel base material layer 31A and upper stainless steel cladding layer 32A are respectively derived from the aforementioned base material 31A and cladding material 32A through rolling, thus retaining the original numbering of base material 31A and cladding material 32A. Among them, base material layer 31A has varying thickness along X direction, specifically, non-monotonically varying thickness along X direction, more specifically, the upper surface of base material layer 31A includes at least two planes arranged along X direction, shown as 5 planes in the Figure. The four sides of cladding layer 32A and base material layer 3 1A are flush with each other, and cladding layer 32A perfectly covers the entire upper surface of base material layer 31A.

For another example, as shown in Fig. 16, in the obtained stainless steel composite plate 30B, its lower carbon steel base material layer 31B and upper stainless steel cladding layer 32B are respectively derived from the aforementioned base material 31B and cladding material 32B through rolling, thus retaining the original numbering of base material 31B and cladding material 32B. Among them, base material layer 31B has varying thickness along X direction, specifically, non-monotonically varying thickness along X direction, more specifically, the upper surface of base material layer 31B includes at least two planes arranged along X direction, shown as 5 planes in the Figure. The four sides of cladding layer 32B and base material layer 31B are flush with each other, and cladding layer 32B perfectly covers the entire upper surface of base material layer 31B.

In summary, a single-sided stainless steel composite plate is provided, which is prepared from the composite blank of this embodiment through the composite blank rolling stage and plate finishing stage. The composite plate is a fully covered, non-uniform thickness plate with non-monotonically varying thickness along X direction, having a total thickness of (5~47) ~(7~55)mm, base material layer thickness of (4~37)~(6~45)mm, and cladding layer thickness of 1~10mm.

The above provides detailed explanation of each process in the composite blank preparation stage of this embodiment. In multiple test examples provided later, test examples 7~9 use this embodiment to prepare composite blanks and use the prepared composite blanks to prepare stainless steel composite plates. Here, Table 3 shows some parameters of the composite blanks in these examples, where the parameters indicated by the symbols refer to the previous introduction.

**Table 3**

| | Base Material | | | | Base Material | | | |
|---|---|---|---|---|---|---|---|---|
| | Steel Grade | L1, mm | W1, mm | thickness, mm | Steel Grade | L2, mm | W2, mm | T2, mm |
| Example 7 | Q420 | 2900 | 2200 | 84-140 | 316L | 2780 | 2080 | 21 |
| Example 8 | Q500 | 2900 | 2200 | 63-105 | 316L | 2780 | 2080 | 21 |
| Example 9 | Q345 | 2900 | 2200 | 189-231 | 316L | 2780 | 2080 | 21 |

### <Fourth Embodiment of Composite Blank Preparation Stage>

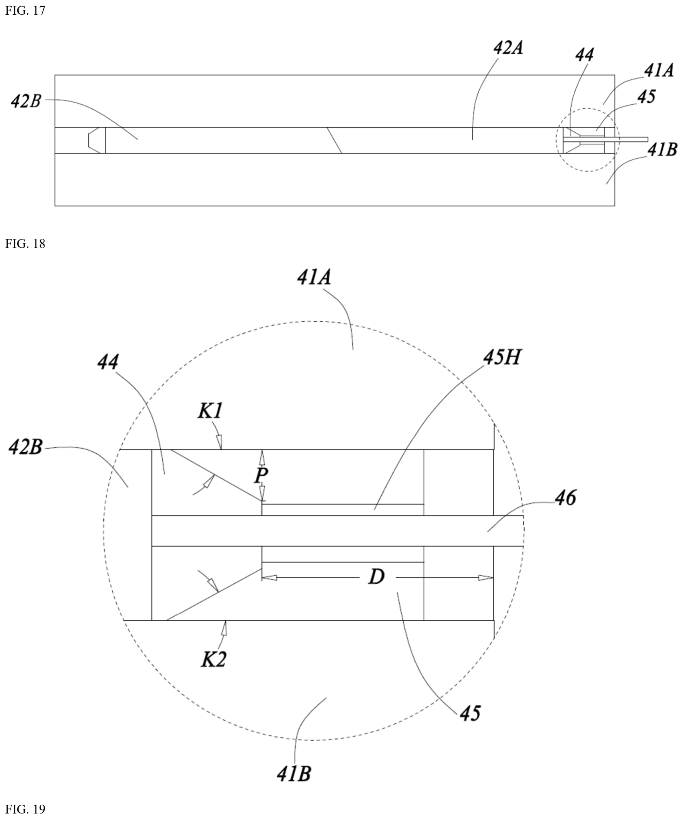

Referring to Figs. 17 to 21, a fourth embodiment of the composite blank preparation stage is shown. This embodiment differs from the first embodiment of the composite blank preparation stage mentioned above only in: the billet preparation process, coating a release agent process, and blank assembly process. While the seal welding process, vacuumizing process, and sealing process are the same as in the first embodiment. Below, only the different processes will be described in detail, other aspects can be understood in combination with the drawings and the first embodiment of the composite blank preparation stage mentioned above, without redundant description.

In this embodiment, referring to Fig. 17, the billet preparation process specifically comprises:
preparing two carbon steel billets with X direction dimension L1 and Y direction dimension W1, as two base materials, which are distinguished as base material 41A and base material 41B in Fig. 17; additionally, the thicknesses of base materials 41A and 41B can be set to be the same or different, if set to different thicknesses, correspondingly stainless steel composite plates of different thickness specifications can be prepared;
polishing the bonding surfaces of each base material, such as surface 41As of base material 41A and surface 41Bs of base material 41B, to remove surface oxide scale and expose metallic luster; after such surface grinding treatment, the roughness Ra of the bonding surfaces is <5µm;
preparing one stainless steel billet with X direction dimension L22, Y direction dimension W2, and thickness T2, as one cladding material, shown as cladding material 42A in Fig. 17; this cladding material 42A has a beveled edge A3s with width V on one side in X direction;
preparing another stainless steel billet with X direction dimension L21, Y direction dimension W2, and thickness T2, as another cladding material, shown as cladding material 42B in Fig. 17; this cladding material 42B has a beveled edge B3s with width V on one side in X direction;
for each cladding material, one smaller surface in the thickness direction constitutes a non-bonding surface, such as surface A2s of cladding material 42A and surface B2s of cladding material 42B, while another larger surface constitutes a bonding surface, such as surface A1s of cladding material 42A and surface B1s of cladding material 42B; polishing the bonding surfaces of each cladding material to remove surface oxide scale and expose metallic luster; after such surface grinding treatment, the roughness Ra of the bonding surfaces is <5µm.

Based on the above dimensions, that is, cladding materials 42A and 42B have the same dimension in Y direction and the same thickness; while their dimensions in X direction can be the same (i.e., L21=L22) or different (i.e., L21≠L22). If L21=L22, correspondingly stainless steel composite plates with the same size specification of cladding layer in X direction can be prepared; if L21≠L22, correspondingly stainless steel composite plates with different size specifications of cladding layer in X direction can be prepared.

Here, the width V refers to the span of the beveled edge in X direction. It is precisely due to the existence of the beveled edge that each cladding material has two surfaces in the thickness direction, with one surface being larger and the other being smaller.

Moreover, L1≥2500mm, W2≥1600mm, T1≥60mm. Regarding the dimensional relationships between cladding materials 42A, 42B and base materials 41A, 41B, L21+L22-V<L1, W2<W1; more preferably, W1=W2+(90~150)mm, L1=L21+L22-V+(90~150)mm.

Preferably, for surface 41As of base material 41A and surface 41Bs of base material 41B, a grinding wheel, belt grinder, or milling machine is respectively used for polishing to remove surface oxide scale and expose metallic luster. For surface A1s of cladding material 42A and surface B1s of cladding material 42B, a wire wheel is respectively used for polishing to remove surface oxide scale and expose metallic luster.

Here, only the surface grinding treatment of the bonding surfaces of each base material and cladding material is described, and it should be noted that surface grinding treatment can be further performed on other surfaces of each base material and cladding material, although such additional surface grinding treatment of other surfaces is not necessary for achieving the technical effect of the present application but may be more advantageous.

Further, in this embodiment, the coating a release agent process specifically includes: coating a release agent on the non-bonding surface and beveled edge of each cladding material. Specifically, for example, coating a release agent on surface A2s and beveled edge A3s of cladding material 42A, and surface B2s and beveled edge B3s of cladding material 42B.

Regarding the composition of the release agent, the first optional scheme is: a coating liquid containing silicon oxide and magnesium oxide, wherein the mass ratio of silicon oxide to magnesium oxide is 3:1. The release agent in this embodiment can achieve good isolation effect, ensuring the subsequent separation of two clad sub-plates. Using this release agent, the amount of release agent 43 coated on the non-bonding surface and beveled edge of each cladding material is 20y mg/m², where y is the ratio of the thickness of the composite blank obtained in the composite blank preparation step to the thickness of the unified clad plate after subsequent rolling, which is also called the compression ratio of composite blank rolling. The preparation method of this release agent and subsequent drying are the same as those introduced in the first embodiment of the composite blank preparation stage mentioned above, and will not be repeated here.

Regarding the composition of the release agent, the second optional scheme is: components with weight ratios of 25~35% silicon nitride + 5~10% thermosetting amino resin + 55~70% water. Compared with existing release agents, and even with the first embodiment of the aforementioned release agent, the release agent in this embodiment not only can achieve good isolation effect, ensuring the subsequent separation of two clad sub-plates, but also the effective component silicon nitride has strong chemical stability and high temperature resistance, thermal shock resistance, and the thermosetting amino resin used as binder can cure at low temperature, is non-toxic, and can achieve strong bonding effect with small amount, therefore overall it is inexpensive, simple to operate, with good isolation and adhesion effects. Using this release agent, the coating thickness of release agent 43 on the non-bonding surface and beveled edge of each cladding material is 0.2~0.5mm. The preparation method of this release agent and subsequent drying are the same as those introduced in the first embodiment of the composite blank preparation stage mentioned above, and will not be repeated here.

Further, in this embodiment, referring to Fig. 18, the blank assembly process specifically includes: assembling the blank with cladding materials 42A and 42B as the middle layer, base material 41A stacked on top, base material 41B stacked at the bottom, and four sealing strips 44 surrounding the four sides of the middle layer, and performing gas-shielded welding between the upper edge of sealing strips 44 and base material 41A, and between the lower edge of sealing strips 44 and base material 41B, to form a base blank. In the middle layer, cladding materials 42A and 42B are laid side by side in X direction, with beveled edge A3s of cladding material 42A and beveled edge B3s of cladding material 42B parallel and facing each other.

It can be understood that in the base blank obtained from the blank assembly process, surface 41As of base material 41A and surface A1s of cladding material 42A face each other and contact as bonding surfaces, surface 41Bs of base material 41B and surface B1s of cladding material 42B face each other and contact as bonding surfaces, while release agent is coated between surface A2s of cladding material 42A and base material 41B, between surface B2s of cladding material 42B and base material 41A, and between beveled edge A3s of cladding material 42A and beveled edge B3s of cladding material 42B, they contact each other but will not bond.

More preferably, in the blank assembly process, when base material 41A, cladding materials 42A and 42B, base material 41B are stacked, and before the upper edge or lower edge of sealing strips 44 is welded to the base materials, place the stacked steel materials as a whole under a four-column hydraulic machine, and apply pressure to the opposite surfaces of the two base materials (that is, the upper surface of base material 41A and the lower surface of base material 41B), with pressure ≥500 tons. Thus, adjacent steel billets can contact more tightly.

Preferably, in the blank assembly process, when performing gas-shielded welding between the edges of sealing strips 44 and base materials, the welding current is 220~240A, welding voltage is 28~32V, welding speed is 300~360mm/min, and interpass temperature is controlled at 140~160°C. Additionally, before performing gas-shielded welding, it is preferred to preheat base materials 41A and 41B with a flame gun at a heating temperature of 150~250°C.

Further, the obtained base blank has grooves on all four sides formed by base material 41A, sealing strips 44, and base material 41B. Preferably, the depths of the grooves on the four sides of the base blank are preferably set to be the same, as shown as depth D in Fig. 19, with a value range of 40~60mm. Through the control of depth D, it can not only effectively prevent weld seam cracking during composite blank rolling, but also avoid deep penetration during subsequent seal welding that forms welding hot cracks, thereby affecting the seal welding quality of the composite blank.

It can be understood that the groove depth depends on the dimensional differences between cladding materials and base materials in X and Y directions, and the thickness of sealing strips 44. For example, during the blank assembly process, the middle layer is centrally placed relative to base materials, the distance from the two sides of the middle layer in Y direction to the corresponding sides of base materials is equal, this distance is 45~75mm, correspondingly the groove depth D=(W1-W2-2T3)/2; the distance from the two sides of the middle layer in X direction to the corresponding sides of base materials is also equal, this distance is 45~75mm, correspondingly the groove depth D=(L1-(L21+L22-V)-2T3)/2. Here, T3 is the thickness of sealing strips, ranging from 10~15mm.

Additionally, regarding the overall dimensions of the four sealing strips 44, at the two sides in X direction of the base blank, the length L31 of sealing strips 44 is W2~W2-2mm, while at the two sides in Y direction of the base blank, the length L32 of sealing strips 44 is L21+L22-V~L21+L22-V-2mm; the width W3 of sealing strips 44 is T2~T2-2mm; the thickness T3 is 10~15mm as mentioned before. Preferably, the width W3 and thickness T3 of sealing strips 44 on the four sides of the base blank are the same.

More preferably, referring to Fig. 19, bevels are formed on both upper and lower edges of the outer surface of sealing strips 44, and the bevel angle is 10~20°, with a vertical depth P of 10~15mm. Through beveling, it not only avoids spot welding on the inner side of sealing strips, avoiding thermal effects on base materials due to multiple welding passes, but also facilitates subsequent seal welding of bevels, ensuring firmness.

Referring to Fig. 19, the bevel angle K1 at the upper edge and bevel angle K2 at the lower edge of the outer surface of sealing strips 44 are respectively 10~20°, which can be the same or different.

Further, a circular through hole is formed on the sealing strip at one side of the base blank, and in this blank assembly process, a steel pipe 46 with an outer diameter of r and length of T3+2D~T3+2D+R is welded in the through hole. The through hole can be machined either before gas-shielded welding of sealing strips 44 with base materials 41A, 41B, or after gas-shielded welding is completed to form the base blank. These all do not deviate from the technical concept of this application.

Preferably, the diameter of the through hole is consistent with the outer diameter of steel pipe 46, both being r.

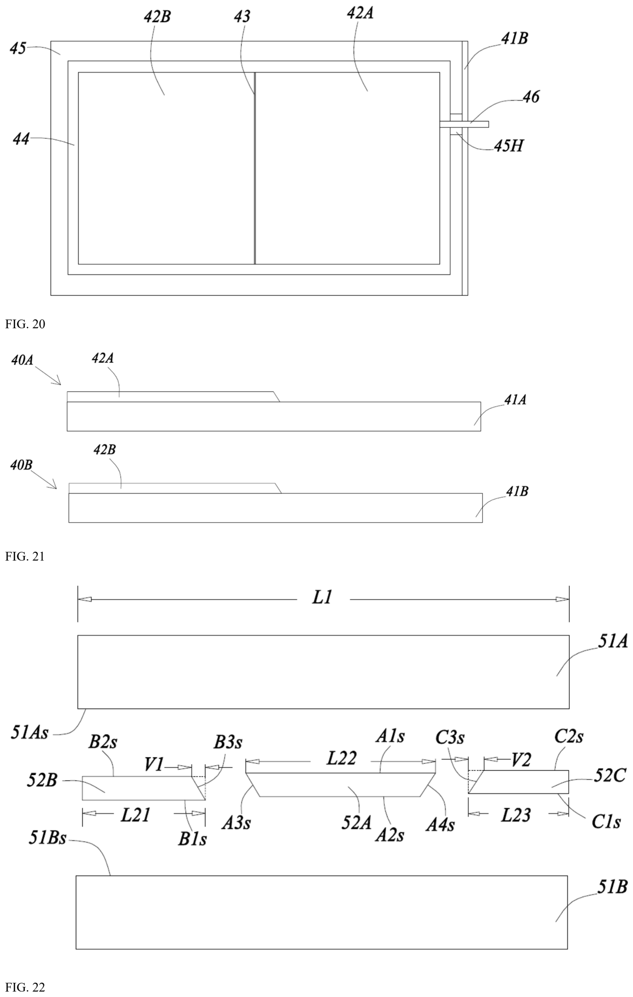

More preferably, as shown in Fig. 20, the through hole is formed on sealing strip 44 at one short side of the base blank, and the through hole is centered at a position of 1/3 length and 1/2 width of the sealing strip 44; referring to Fig. 20, the end face of steel pipe 46 is flush with the inner surface of sealing strip 44. This ensures the effectiveness of vacuumizing.

It should be noted here that, according to the example in the Figs., X direction is the length direction of the base materials, Y direction is the width direction of the base materials, that is, the two cladding materials in the drawings are arranged side by side in the length direction of the base materials between the two base materials; of course, in a variant embodiment, X direction can also be the width direction of the base materials, Y direction can be the length direction of the base materials, that is, the two cladding materials are arranged side by side in the width direction of the base materials between the two base materials.

Further, as mentioned before, the structural shape of the final stainless steel composite plate is affected by the billet shape dimensions and blank assembly method prepared in the composite blank preparation stage.

As shown in Fig. 21, in this embodiment, based on the side-by-side arrangement of cladding materials 42A and 42B in the middle layer during the blank assembly process, the composite blank based on this embodiment, after subsequent composite blank rolling stage and plate finishing stage, produces two stainless steel composite plates, both having cladding layer covering part of the upper surface rather than the entire upper surface of the base material layer.

For example, in the obtained stainless steel composite plate 40A, its carbon steel base material layer 41A and stainless steel cladding layer 42A are respectively derived from the aforementioned base material 41A and cladding material 42A through rolling, thus retaining the original numbering of base material 41A and cladding material 42A. Among them, three sides of cladding layer 42A are flush with three sides of base material layer 41A; while another side of cladding layer 42A is located inside the upper surface of base material layer 41A, thus, cladding layer 42A only covers one end of base material layer 41A while exposing the other end.

For example, in the obtained stainless steel composite plate 40B, its carbon steel base material layer 41B and stainless steel cladding layer 42B are respectively derived from the aforementioned base material 41B and cladding material 42B through rolling, thus retaining the original numbering of base material 41B and cladding material 42B. Among them, three sides of cladding layer 42B are flush with three sides of base material layer 41B; while another side of cladding layer 42B is located inside the upper surface of base material layer 41B, thus, cladding layer 42B only covers one end of base material layer 41B while exposing the other end.

The beneficial effects of composite plates prepared from the composite blank of this embodiment need to be understood in conjunction with the current use status of existing stainless steel composite plates in bridge engineering. Specifically, for stainless steel composite plates used in bridge structures, during downstream structural factory processing and use, they need to be butt-joined with bridge structure steel plates. At this joint position, the base material layer of the stainless steel composite plate and the bridge structure steel plate are of the same material, making welding strength easy to guarantee. However, the stainless steel cladding layer and bridge structure steel plate are dissimilar materials, making welding difficult with poor firmness, which affects the safety of the overall structural component. The composite plates prepared from the composite blank of this embodiment have one end composed of carbon steel and stainless steel composite structure (for example, the left end of composite plates 40A, 40B in Fig. 21), this end can, like existing composite plates, combine the corrosion resistance of the cladding layer with good mechanical properties of the base material layer; while the other end is purely carbon steel plate (for example, the right end of composite plates 40A, 40B in Fig. 21), thus, this stainless steel composite plate avoids the existing dissimilar welding problems in use, has strong firmness in use, and has low production difficulty, low cost and high construction efficiency in later use.

More preferably, the side edge of cladding layer 42A that is "located inside the upper surface of base material layer 41A" is set as a beveled edge, this beveled edge forms an obtuse angle with the upper surface of cladding layer 42A; similarly, the side edge of cladding layer 42B that is "located inside the upper surface of base material layer 41B" is set as a beveled edge, this beveled edge forms an obtuse angle with the upper surface of cladding layer 42B. In this regard, when existing composite plates are applied in bridge engineering, to avoid steps (height differences) between the edge of stainless steel cladding layer and bridge structure steel plate, an additional stainless steel plate needs to be added for transition, which not only increases additional material costs, but also requires the added stainless steel plate to be welded to both the cladding layer of the stainless steel composite plate and the bridge structure steel plate, greatly increasing welding workload and affecting construction efficiency. While in this embodiment, there will be no step between the edge of stainless steel cladding layer and bridge structure steel plate, but rather a beveled transition, requiring no additional transition plate, resulting in high construction efficiency, less workload, and greater structural strength.

In summary, a single-sided stainless steel composite plate is provided, which is prepared from the composite blank of this embodiment through the composite blank rolling stage and plate finishing stage. The composite plate has a total thickness of 5~55mm, base material layer thickness of 4-45mm, cladding layer thickness of 1~10mm, and one end in X direction is covered while the other end is uncovered.

The above provides detailed explanation of each process in the composite blank preparation stage of this embodiment. In multiple test examples provided later, test examples 10~12 use this embodiment to prepare composite blanks and use the prepared composite blanks to prepare stainless steel composite plates. Here, Table 4 shows some parameters of the composite blanks in these examples, where the parameters indicated by the symbols refer to the previous introduction.

**Table 4**

| | Base Material | | | | Base Material | | | | | |
|---|---|---|---|---|---|---|---|---|---|---|
| | Steel Grade | L1, mm | W1, mm | T1, mm | Steel Grade | L21, mm | L22, mm | W2, mm | T2, mm | V, mm |
| Example 10 | Q500 | 2700 | 2100 | 210 | 316L | 1290 | 1290 | 1980 | 21 | 21 |
| Example 11 | Q420 | 2700 | 2100 | 252 | 316L | 1580 | 1000 | 1980 | 21 | 21 |
| Example 12 | Q345 | 2700 | 2100 | 315 | 316L | 1180 | 1400 | 1980 | 70 | 70 |

### <Fifth Embodiment of Composite Blank Preparation Stage>

Referring to Figs. 22 to 26, a fifth embodiment of the composite blank preparation stage is shown. This embodiment differs from the first embodiment of the composite blank preparation stage mentioned above in: the billet preparation process, coating a release agent process, and blank assembly process. While the seal welding process, vacuumizing process, and sealing process are the same as in the first embodiment. Below, only the different processes will be described in detail, other aspects can be understood in combination with the drawings and the first embodiment of the composite blank preparation stage mentioned above, without redundant description.

In this embodiment, referring to Fig. 22, the billet preparation process specifically comprises:
preparing two carbon steel billets with X direction dimension L1 and Y direction dimension W1, as two base materials, which are distinguished as base material 51A and base material 51B in Fig. 22; additionally, the thicknesses of base materials 51A and 51B can be set to be the same or different;
polishing the bonding surfaces of each base material, such as surface 51As of base material 51A and surface 51Bs of base material 51B, to remove surface oxide scale and expose metallic luster; after such surface grinding treatment, the roughness Ra of the bonding surfaces is <5µm;
preparing one stainless steel billet with X direction dimension L22, Y direction dimension W2, and thickness T2, as one cladding material, shown as cladding material 52A in Fig. 22; this cladding material 52A has a beveled edge A3s with width V1 on one side in X direction, and another beveled edge A4s with width V2 on another side in X direction;
preparing another stainless steel billet with X direction dimension L21, Y direction dimension W2, and thickness T2, as another cladding material, shown as cladding material 52B in Fig. 22; this cladding material 52B has a beveled edge B3s with width V1 on one side in X direction;
preparing another stainless steel billet with X direction dimension L23, Y direction dimension W2, and thickness T2, as another cladding material, shown as cladding material 52C in Fig. 22; this cladding material 52C has a beveled edge C3s with width V2 on one side in X direction;
for each cladding material, one smaller surface in the thickness direction constitutes a non-bonding surface, such as surface A2s of cladding material 52A, surface B2s of cladding material 52B, and surface C2s of cladding material 52C, while another larger surface constitutes a bonding surface, such as surface A1s of cladding material 52A, surface B1s of cladding material 52B, and surface C1s of cladding material 52C; polishing the bonding surfaces of each cladding material to remove surface oxide scale and expose metallic luster; after such surface grinding treatment, the roughness Ra of the bonding surfaces is <5µm.

Based on the above dimensions, that is, cladding materials 52A, 52B and 52C have the same dimension in Y direction and the same thickness; while their dimensions in X direction can all be the same (i.e., L21=L23=L22), or two of them can be the same (i.e., L21=L23≠L22, or L21≠L23=L22, or L21=L22≠L23), or they can all be different (i.e., L21≠L22≠L23).

Here, width V1 and width V2 refer to the span of the beveled edges in X direction. It is precisely due to the existence of the beveled edges that each cladding material has two surfaces in the thickness direction, with one surface being larger and the other being smaller. Both edge A3s of cladding material 52A and edge B3s of cladding material 52B are beveled edges with width V1, thus, as mentioned in the subsequent blank assembly process, edges A3s and B3s are parallel and face each other; similarly, edge A4s of cladding material 52A and edge C3s of cladding material 52C are both beveled edges with width V2, thus, as mentioned in the subsequent blank assembly process, edges A3s and B3s are parallel and face each other.

Preferably, both edge A3s and edge A4s of cladding material 52A form obtuse angles with non-bonding surface A2s of cladding material 52A.

Moreover, L1≥2500mm, W2≥1600mm, T1≥60mm. Regarding the dimensional relationships between cladding materials 52A, 52B, 52C and base materials 51A, 51B, L21+L22+L23-V1-V2<L1, W2<W1; more preferably, W1=W2+(90~150)mm, L1=L21+L22+L23-V1-V2+(90~150)mm.

Preferably, for surface 51As of base material 51A and surface 51Bs of base material 51B, a grinding wheel, belt grinder, or milling machine is respectively used for polishing to remove surface oxide scale and expose metallic luster. For surface A1s of cladding material 52A, surface B1s of cladding material 52B, and surface C1s of cladding material 52C, a wire wheel is respectively used for polishing to remove surface oxide scale and expose metallic luster.

Here, only the surface grinding treatment of the bonding surfaces of each base material and cladding material is described, and it should be noted that surface grinding treatment can be further performed on other surfaces of each base material and cladding material, although such additional surface grinding treatment of other surfaces is not necessary for achieving the technical effect of the present application but may be more advantageous.

Further, in this embodiment, the coating a release agent process specifically includes: coating a release agent on the non-bonding surface and beveled edges of each cladding material. Specifically, for example, coating a release agent on surface A2s, beveled edge A3s and beveled edge A4s of cladding material 52A, surface B2s and beveled edge B3s of cladding material 52B, and surface C2s and beveled edge C3s of cladding material 52C.

Regarding the composition of the release agent, the first optional scheme is: a coating liquid containing silicon oxide and magnesium oxide, wherein the mass ratio of silicon oxide to magnesium oxide is 3:1. The release agent in this embodiment can achieve good isolation effect, ensuring the subsequent separation of two clad sub-plates. Using this release agent, the amount of release agent 53 coated on the bonding surface and beveled edges of each cladding material is 20y mg/m², where y is the ratio of the thickness of the composite blank obtained in the composite blank preparation step to the thickness of the unified clad plate after subsequent rolling, which is also called the compression ratio of composite blank rolling. The preparation method of this release agent and subsequent drying are the same as those introduced in the first embodiment of the composite blank preparation stage mentioned above, and will not be repeated here.

Regarding the composition of the release agent, the second optional scheme is: components with weight ratios of 25~35% silicon nitride + 5~10% thermosetting amino resin + 55~70% water. Compared with existing release agents, and even with the first embodiment of the aforementioned release agent, the release agent in this embodiment not only can achieve good isolation effect, ensuring the subsequent separation of two clad sub-plates, but also the effective component silicon nitride has strong chemical stability and high temperature resistance, thermal shock resistance, and the thermosetting amino resin used as binder can cure at low temperature, is non-toxic, and can achieve strong bonding effect with small amount, therefore overall it is inexpensive, simple to operate, with good isolation and adhesion effects. Using this release agent, the coating thickness of release agent 53 on the bonding surface and beveled edges of each cladding material is 0.2~0.5mm. The preparation method of this release agent and subsequent drying are the same as those introduced in the first embodiment of the composite blank preparation stage mentioned above, and will not be repeated here.

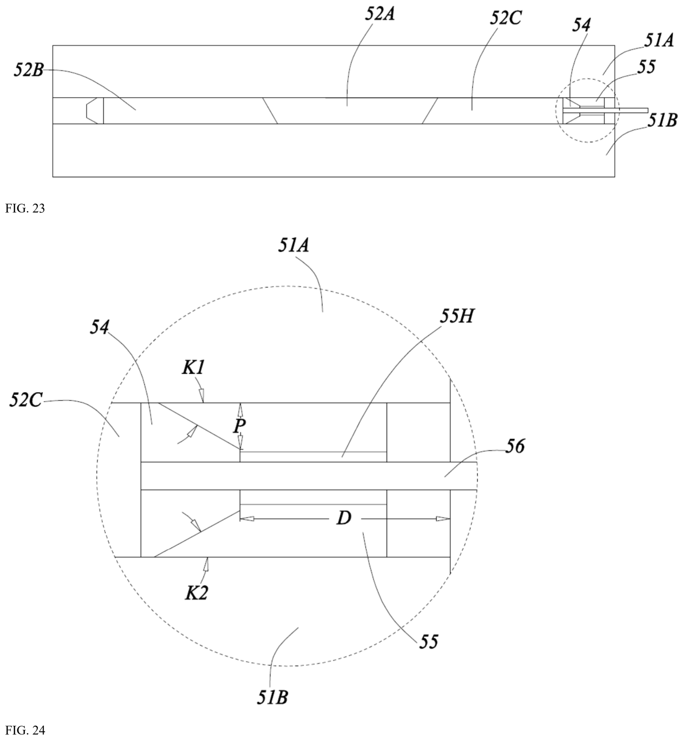

Further, in this embodiment, referring to Fig. 23, the blank assembly process specifically includes: assembling the blank with cladding materials 52A, 52B and 52C as the middle layer, base material 51A stacked on top, base material 51B stacked at the bottom, and four sealing strips 54 surrounding the four sides of the middle layer, and performing gas-shielded welding between the upper edge of sealing strips 54 and base material 51A, and between the lower edge of sealing strips 54 and base material 51B, to form a base blank. In the middle layer, cladding materials 52B, 52A and 52C are laid side by side in sequence in X direction, beveled edge A3s of cladding material 52A and beveled edge B3s of cladding material 52B are parallel and face each other, beveled edge A4s of cladding material 52A and beveled edge C3s of cladding material 52C are parallel and face each other.

It can be understood that in the base blank obtained from the blank assembly process, surface 51As of base material 51A and surface A1s of cladding material 52A face each other and contact as bonding surfaces, surface 51Bs of base material 51B and surface B1s of cladding material 52B face each other and contact as bonding surfaces, surface 51Bs of base material 51B also faces and contacts surface C1s of cladding material 52C as bonding surfaces, while release agent is coated between surface A2s of cladding material 52A and base material 51B, between surface B2s of cladding material 52B and base material 51A, between surface C2s of cladding material 52C and base material 51A, between beveled edge A3s of cladding material 52A and beveled edge B3s of cladding material 52B, and between beveled edge A4s of cladding material 52A and beveled edge C3s of cladding material 52C, they contact each other but will not bond.

More preferably, in the blank assembly process, when base material 51A, cladding materials 52B, 52A and 52C, base material 51B are stacked, and before the upper edge or lower edge of sealing strips 54 is welded to the base materials, place the stacked steel materials as a whole under a four-column hydraulic machine, and apply pressure to the opposite surfaces of the two base materials (that is, the upper surface of base material 51A and the lower surface of base material 51B), with pressure ≥500 tons. Thus, adjacent steel billets can contact more tightly.

Preferably, in the blank assembly process, when performing gas-shielded welding between the edges of sealing strips 54 and base materials, the welding current is 220~240A, welding voltage is 28~32V, welding speed is 300~360mm/min, and interpass temperature is controlled at 140~160°C. Additionally, before performing gas-shielded welding, it is preferred to preheat base materials 51A and 51B with a flame gun at a heating temperature of 150~250°C.

Further, the obtained base blank has grooves on all four sides formed by base material 51A, sealing strips 54, and base material 51B. Preferably, the depths of the grooves on the four sides of the base blank are preferably set to be the same, as shown as depth D in Fig. 24, with a value range of 40~60mm. Through the control of depth D, it can not only effectively prevent weld seam cracking during composite blank rolling, but also avoid deep penetration during subsequent seal welding that forms welding hot cracks, thereby affecting the seal welding quality of the composite blank.

It can be understood that the groove depth depends on the dimensional differences between cladding materials and base materials in X and Y directions, and the thickness of sealing strips 54. For example, during the blank assembly process, the middle layer is centrally placed relative to base materials, the distance from the two sides of the middle layer in Y direction to the corresponding sides of base materials is equal, this distance is 45~75mm, correspondingly the groove depth D=(W1-W2-2T3)/2; the distance from the two sides of the middle layer in X direction to the corresponding sides of base materials is also equal, this distance is 45~75mm, correspondingly the groove depth D=(L1-(L21+L22+L23-V1-V2)-2T3)/2. Here, T3 is the thickness of sealing strips, ranging from 10~15mm.

Additionally, regarding the overall dimensions of the four sealing strips 54, at the two sides in X direction of the base blank, the length L31 of sealing strips 54 is W2~W2-2mm, while at the two sides in Y direction of the base blank, the length L32 of sealing strips 54 is L21+L22+L23-Vl-V2~L21+L22+L23-V1-V2-2mm; the width W3 of sealing strips 54 is T2~T2-2mm; the thickness T3 is 10~15mm as mentioned before. Preferably, the width W3 and thickness T3 of sealing strips 54 on the four sides of the base blank are the same.

More preferably, referring to Fig. 24, bevels are formed on both upper and lower edges of the outer surface of sealing strips 54, and the bevel angle is 10~20°, with a vertical depth P of 10~15mm. Through beveling, it not only avoids spot welding on the inner side of sealing strips, avoiding thermal effects on base materials due to multiple welding passes, but also facilitates subsequent seal welding of bevels, ensuring firmness.

Referring to Fig. 24, the bevel angle K1 at the upper edge and bevel angle K2 at the lower edge of the outer surface of sealing strips 54 are respectively 10~20°, which can be the same or different.

Further, a circular through hole is formed on the sealing strip at one side of the base blank, and in this blank assembly process, a steel pipe 56 with an outer diameter of r and length of T3+2D~T3+2D+R is welded in the through hole. The through hole can be machined either before gas-shielded welding of sealing strips 54 with base materials 51A, 51B, or after gas-shielded welding is completed to form the base blank. These all do not deviate from the technical concept of this application.

Preferably, the diameter of the through hole is consistent with the outer diameter of steel pipe 56, both being r.

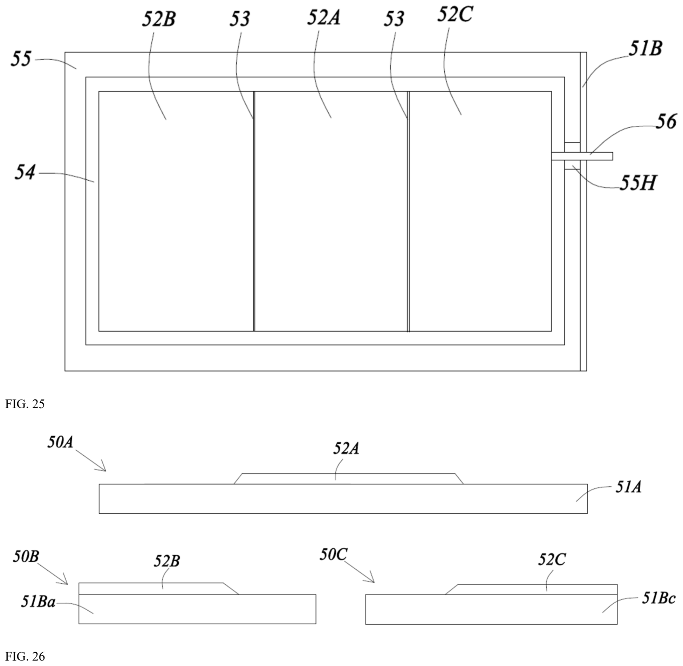

More preferably, as shown in Fig. 25, the through hole is formed on sealing strip 54 at one short side of the base blank, and the through hole is centered at a position of 1/3 length and 1/2 width of the sealing strip 54; referring to Fig. 24, the end face of steel pipe 56 is flush with the inner surface of sealing strip 54. This ensures the effectiveness of vacuumizing.

It should be noted here that, according to the example in the Figs., X direction is the length direction of the base materials, Y direction is the width direction of the base materials, that is, the three cladding materials in the drawings are arranged side by side in the length direction of the base materials between the two base materials; of course, in a variant embodiment, X direction can also be the width direction of the base materials, Y direction can be the length direction of the base materials, that is, the three cladding materials are arranged side by side in the width direction of the base materials between the two base materials.

Further, as mentioned before, the structural shape of the final stainless steel composite plate is affected by the billet shape dimensions and blank assembly method prepared in the composite blank preparation stage.

As shown in Fig. 26, in this embodiment, based on the sequential side-by-side arrangement of cladding materials 52B, 52A and 52C in the middle layer during the blank assembly process, the composite blank based on this embodiment, after subsequent composite blank rolling stage and plate finishing stage, produces three stainless steel composite plates, of which at least two have cladding layer covering part of the upper surface rather than the entire upper surface of the base material layer.

As shown in Fig. 26, in the obtained stainless steel composite plate 50A, its carbon steel base material layer 51A and stainless steel cladding layer 52A are respectively derived from the aforementioned base material 51A and cladding material 52A through rolling, thus retaining the original numbering of base material 51A and cladding material 52A. Among them, the two sides of cladding layer 52A in Y direction are flush with the corresponding two sides of base material layer 51A; while both sides of cladding layer 52A in X direction are located inside the upper surface of base material layer 51A, thus, cladding layer 52A only covers the middle region of base material layer 51A while exposing both ends of base material layer 51A in X direction. This type of composite plate can be called a middle stainless steel composite plate. Thus, the middle part of this stainless steel composite plate is a composite structure consisting of carbon steel base material layer 51A and stainless steel cladding layer 52A, which can, like existing composite plates, combine the corrosion resistance of cladding layer 52A with good mechanical properties of base material layer 51A; while both ends of the stainless steel composite plate are purely carbon steel base material layer 51A, which is directly integrated with the said composite structure, these two ends of carbon steel base material layer 51A can be directly used in engineering without welding, thus, this stainless steel composite plate avoids existing dissimilar welding problems in use, has strong firmness in use, low production difficulty, low cost and high construction efficiency.

Furthermore, both sides of cladding layer 52A in X direction are set as beveled edges, and these two beveled edges form obtuse angles with the upper surface of cladding layer 52A. In this regard, when existing composite plates are applied in bridge engineering, to avoid steps (height differences) between the edge of stainless steel cladding layer and bridge structure steel plate, an additional stainless steel plate needs to be added for transition, which not only increases additional material costs, but also requires the added stainless steel plate to be welded to both the cladding layer of the stainless steel composite plate and the bridge structure steel plate, greatly increasing welding workload and affecting construction efficiency. While in this embodiment, there will be no step between the edge of stainless steel cladding layer and bridge structure steel plate, but rather a beveled transition, requiring no additional transition plate, resulting in high construction efficiency, less workload, and greater structural strength.

As shown in Fig. 26, in the obtained stainless steel composite plates 50B and 50C, their respective stainless steel cladding layers 52B and 52C are derived from the aforementioned cladding materials 52B and 52C through rolling, thus retaining the numbering of cladding materials 52B and 52C; while the original base material 51B is rolled and cut into two parts, one part forms the base material layer 51Ba of composite plate 50B, and the other part forms the base material layer 51Bc of composite plate 50C.

As shown in the Fig., in stainless steel composite plate 50B, three sides of cladding layer 52B are flush with three sides of base material layer 51Ba; while another side of cladding layer 52B is located inside the upper surface of base material layer 51Ba, thus, cladding layer 52B only covers one end (for example, the left end in Fig. 26) of base material layer 51Ba while exposing the other end (for example, the right end in Fig. 26). Similarly, in stainless steel composite plate 50C, three sides of cladding layer 52C are flush with three sides of base material layer 51Bc; while another side of cladding layer 52C is located inside the upper surface of base material layer 51Bc, thus, cladding layer 52C only covers one end (for example, the right end in Fig. 26) of base material layer 51Bc while exposing the other end (for example, the left end in Fig. 26). Thus, composite plates 50B and 50C have one end composed of carbon steel and stainless steel composite structure, this end can, like existing composite plates, combine the corrosion resistance of the cladding layer with good mechanical properties of the base material layer; while the other end is purely carbon steel plate, thus, this stainless steel composite plate avoids existing dissimilar welding problems in use, has strong firmness in use, and has low production difficulty, low cost and high construction efficiency in later use.

More preferably, the side edge of cladding layer 52B that is "located inside the upper surface of base material layer 51Ba" is set as a beveled edge, this beveled edge forms an obtuse angle with the upper surface of cladding layer 52B; similarly, the side edge of cladding layer 52C that is "located inside the upper surface of base material layer 51Bc" is set as a beveled edge, this beveled edge forms an obtuse angle with the upper surface of cladding layer 52C. In this regard, there will be no step between the edge of stainless steel cladding layer and bridge structure steel plate, but rather a beveled transition, requiring no additional transition plate, resulting in high construction efficiency, less workload, and greater structural strength.

It can be understood that when the original base material 51B is rolled and cut into two parts, based on different cutting positions, one composite plate can be formed as a fully covered composite plate with equal dimensions of cladding layer and base material layer (such as composite plate 10B shown in Fig. 6), and another composite plate can be formed with one end of the base material layer covered by the cladding layer while the other end is uncovered. Of course, other cutting methods can also be performed according to requirements.

This shows that this embodiment can simultaneously obtain at least two different types of composite plates, with better industrial value.

Additionally, the aforementioned fourth and fifth embodiments respectively introduced blank assembly methods with two cladding materials and three cladding materials arranged side by side, while the present application is not limited to this, and can also arrange many cladding materials side by side in the blank assembly method.

In summary, a single-sided stainless steel composite plate is provided, which is prepared from the composite blank of this embodiment through the composite blank rolling stage and plate finishing stage. The composite plate has a total thickness of 5~55mm, base material layer thickness of 4~45mm, cladding layer thickness of 1~10mm, and the middle region in X direction is covered while both ends are uncovered. Of course, another single-sided stainless steel composite plate can also be provided simultaneously, which is prepared from the composite blank of this embodiment through the composite blank rolling stage and plate finishing stage. The composite plate has a total thickness of 5~55mm, base material layer thickness of 4~45mm, cladding layer thickness of 1~10mm, and one end in X direction is covered while the other end is uncovered.

The above provides detailed explanation of each process in the composite blank preparation stage of this embodiment. In multiple test examples provided later, test examples 13~15 use this embodiment to prepare composite blanks and use the prepared composite blanks to prepare stainless steel composite plates. Here, Table 5 shows some parameters of the composite blanks in these examples, where the parameters indicated by the symbols refer to the previous introduction.

**Table 5**

| | Base Material | | | | Base Material | | | | | | | |
|---|---|---|---|---|---|---|---|---|---|---|---|---|
| | Steel Grade | L1, mm | W1, mm | T1, mm | Steel Grade | L21, mm | L22, mm | L23, mm | W2, mm | T2, mm | V1, mm | V2, mm |
| Example 13 | Q345 | 2800 | 2000 | 210 | 316L | 894 | 894 | 894 | 1880 | 35 | 35 | 35 |
| Example **14** | Q370 | 28DD | 2000 | 80 | 316L | 1000 | 680 | 1000 | 1880 | 16 | 16 | 16 |
| Example 15 | Q500 | 2800 | 2000 | 84 | 316L | 994 | 894 | 794 | 1880 | 21 | 21 | 21 |

The above introduces five embodiments of the composite blank preparation stage respectively, and next, detailed embodiments of the composite blank rolling stage and plate finishing stage will be introduced in detail. Here it should be noted that the following specific embodiments of the composite blank rolling stage and plate finishing stage are applicable to any of the above five embodiments of the composite blank preparation stage. That is, composite blanks prepared by any of the above five embodiments of the composite blank preparation stage can all be prepared into single-sided stainless steel composite plates through the following specific embodiments of the composite blank rolling stage and plate finishing stage.

Regarding the composite blank rolling stage, in this stage, the composite blank obtained from the composite blank preparation stage undergoes heating process, rolling process, and cooling process treatment to produce a unified clad plate. The following provides detailed introduction of each process.

First, regarding the heating process, the composite blank is heated in a heating furnace to prepare for the subsequent rolling process, which can be implemented using known technology in the field.

While this application provides a preferred embodiment of the heating process, specifically: heating the composite blank in a heating furnace in five stages of preheating stage, first heating stage, second heating stage, third heating stage and soaking stage, with preheating stage temperature ≤850°C, first heating stage temperature 1080±30°C, second heating stage temperature 1160+30°C, third heating stage temperature 1220±20°C, soaking stage temperature 1190±20°C, dwelling time in third heating stage is (0.25~0.35)×t min/mm, where t is the thickness of the composite blank, and dwelling time in soaking stage is 15min~30min. Thus, with the middle layer of the composite blank being stainless steel cladding material and the upper and lower layers being carbon steel base materials, the two materials have large differences in thermal conductivity, expansion coefficient, etc., which would generate large stresses during heating process. The heating process of this embodiment can better control the heating rate of the composite blank in each stage, ensure uniform heating, thereby avoiding risks of cracking and air leakage, thus making the final composite plate have excellent bonding interface.

Further, in the rolling process, the composite blank from the heating furnace is rolled to produce a unified clad plate.

In one embodiment, during the entire rolling process, the first n passes use transverse rolling, and passes from the n+1 pass use longitudinal rolling, and, the reduction amount of the first pass is ≥25mm and rolling temperature is ≥1060°C, the width of the billet obtained from the nth pass is Wt+(0~40)mm, where Wt is the target width of the unified clad plate, the rolling temperature of the nth pass is ≥1030°C; between the nth pass and the n+1 pass, and between the n+2 pass and the n+3 pass, the billet undergoes one reciprocating water cooling in 6 sets of manifolds, with upper manifold cooling water flow rate 120~180m³/h and lower manifold cooling water flow rate 160~220m³/h, and roller table speed 0.8~1.2m/s; the reduction amounts from the n+1 pass to the n+3 pass are all ≥40mm, especially the reduction amount of the n+2 pass is preferably ≥42mm, the rolling temperature of the n+1 pass is ≥950°C; by the m-th pass, the rolling temperature is ≥900°C, rolling until the billet thickness is 2.5~3.5 times the target thickness of the unified clad plate; then perform water cooling until the surface temperature of the billet drops below 840°C; then perform second stage rolling until the billet thickness reaches the target thickness of the unified clad plate, completing the entire rolling process, the rolling temperature of the first pass in the second stage rolling is 810°C~840°C, and the rolling temperature of the last pass is 780~810°C.

Thus, the rolling process of this embodiment, on one hand, can ensure the penetration effect of core deformation, facilitate the bonding between cladding material and base material, improve the interface bonding rate and bonding strength between base material layer and cladding layer of the final composite plate; on the other hand, guarantee the relevant mechanical properties, corrosion resistance and low temperature impact toughness of the unified clad plate, avoiding performance degradation due to the combination of base material and cladding material.

Next in the cooling process, that is, cooling the hot unified clad plate obtained from the rolling process, specifically for example, after the aforementioned "rolling temperature of the last pass is 780~810°C", the temperature of the obtained unified clad plate when leaving the rolling mill is around 780°C, then cooling to room temperature. Existing feasible cooling technologies can be adopted for cooling, while in a preferred embodiment of the present application, a cooling process including intermittent cooling technology is provided, which can have superior beneficial effects compared to existing cooling technologies.

Specifically, in this preferred embodiment, the cooling process includes: after the unified clad plate leaves the rolling mill, it enters an ultra-rapid cooling system for intermittent cooling. The ultra-rapid cooling system has 24 sets of cooling manifolds arranged at 1m intervals along the roller table; in the intermittent cooling: each set of cooling manifolds has a cooling distance of 1m, when the unified clad plate passes through the ultra-rapid cooling system, the on-off states of all 24 sets of cooling manifolds are controlled by turning on N sets of cooling manifolds followed by not turning on M sets of cooling manifolds, the cooling water pressure is 0.15~0.30MPa, the cooling rate is 3~15°C/s, the final cooling temperature is 380~590°C; where N takes values of 2, 3 or 4, M takes values of 2, 3 or 4.

Through the use of said intermittent cooling in this embodiment, when the unified clad plate passes through the ultra-rapid cooling system, it progresses through alternating activated and deactivated cooling manifolds, thus, each part of the unified clad plate undergoes cooling, reheating, cooling, reheating... and so on in cycles until the unified clad plate leaves the ultra-rapid cooling system; in this way, during the cooling-reheating cycles of the unified clad plate, the carbon steel base material continuously undergoes phase transformation and self-tempering effects, and the phase transformation reaction gradually penetrates toward the core until the entire carbon steel base material completes transformation; this intermittent cooling process differs from conventional reciprocating cooling, where reheating and self-tempering occur after the surface or near-surface layer has completed transformation, with large differences in temperature and cooling rate between surface and core, resulting in large differences in structure and mechanical properties, while in this embodiment's intermittent cooling process, at the same moment some parts of the unified clad plate are in cooling state while other parts are in reheating/self-tempering state, and each part of the unified clad plate alternates between cooling and reheating/self-tempering over time, making the differences in temperature, cooling rate, structure, properties etc. between surface and core of the unified clad plate relatively small, for example, the Vickers hardness difference in the thickness direction of the base material layer of the final composite plate is ≤10, the strength difference between head, middle and tail is ≤40MPa, and the strength difference across the entire plate is ≤40MPa; meanwhile, intermittent cooling can also further improve the plate shape, i.e., low flatness deviation, and excellent plate shape can be obtained even with direct cooling bed cooling without straightening after cooling is completed.

More preferably, in the said intermittent cooling:
When the thickness of the unified clad plate is below 54mm, for example 10~54mm, the roller table speed of the ultra-rapid cooling system is 0.4~0.8m/s, the unified clad plate passes through the ultra-rapid cooling system once, then leaves the system; preferably, the preferred control scheme for the 24 sets of cooling manifolds is, for example, sets 1~4 on, sets 5~6 off, sets 7~8 on, sets 9~10 off, sets 11~12 on, sets 13~14 off, sets 15~16 on, sets 17~18 off, sets 19~20 on, sets 21~22 off, sets 23~24 on;

When the thickness of the unified clad plate is >54mm and <70mm, the roller table speed of the ultra-rapid cooling system is above 0.2m/s but less than 0.6m/s, the unified clad plate passes through the ultra-rapid cooling system once, then leaves the system; when the thickness of the unified clad plate is ≥70mm, the roller table speed of the ultra-rapid cooling system is 0.4~0.9m/s, the unified clad plate first enters forward from the entrance of the ultra-rapid cooling system, when its head reaches the 24th set of cooling manifolds, the roller table reverses direction, the unified clad plate passes back through the ultra-rapid cooling system and leaves from the entrance. When the thickness of the unified clad plate is >54mm, preferably, the preferred control scheme for the 24 sets of cooling manifolds is, for example, sets 1~4 on, sets 5~8 off, sets 9~12 on, sets 13~16 off, sets 17~20 on, sets 21~22 off, sets 23~24 on.

Thus, through intermittent cooling, plate shape control and uniformity control can also be achieved for unified clad plates with large thickness (for example, thickness >54mm and <70mm) or even very large thickness (for example, thickness ≥70mm), overcoming the production difficulties of existing thick stainless steel composite plates.

Further, in one embodiment, the cooling process specifically also includes: after leaving the ultra-rapid cooling system, the unified clad plate directly goes onto a cooling bed for air cooling until room temperature. As a better alternative embodiment, instead of directly going onto a cooling bed after leaving the ultra-rapid cooling system, the unified clad plate can first undergo stack cooling, for example, the cooling process specifically also includes: after leaving the ultra-rapid cooling system, the unified clad plate is placed between two steel plates with temperature T_{f}150°C~T_{f}+150°C for stack cooling, with stack cooling time of 0.4min/mm×t0±5min, where t0 is the thickness of the unified clad plate; after stack cooling ends, the unified clad plate is placed on a cooling bed for natural cooling to room temperature; where T_{f}=550+30Si-20Mn+15Cr-15Ni+10Mo, the element symbols in the formula represent 100 times the mass percentage of each element in the base material. Thus, through stack cooling, especially the control of stack cooling plate temperature, while ensuring the performance of the composite plate, the temperature in the thickness direction of the entire plate can be uniform, avoiding situations where base material temperature is low while cladding material temperature is high, thereby maintaining similar expansion amounts between base material and cladding material, thus ensuring plate shape.

Above, the composite blank rolling stage has been explained in detail, next, the preparation method of the present application also includes a plate finishing stage, as mentioned before, the plate finishing stage includes cutting process and leveling process.

Specifically, in the cutting process, for the unified clad plate cooled to room temperature by air cooling, a plasma cutting machine is used to cut the four sides to remove the parts outside the sealing strips, separating the unified clad plate into upper and lower clad sub-plates. The obtained two clad sub-plates can become two single-sided stainless steel composite plates after the leveling process, of course, the upper and lower clad sub-plates can also be further cut to make more single-sided stainless steel composite plates, such as the three stainless steel composite plate products introduced in the fifth embodiment of the composite blank preparation stage mentioned before, referring to stainless steel composite plates 50A, 50B and 50C in Fig. 26.

Regarding "parts outside the sealing strips", these are the edge parts on the unified clad plate transformed from the sealing strips and filling layer mentioned before after the previous rolling steps. Thus, removing these parts exposes the stainless steel cladding layer, and without the connection of these parts, the unified clad plate automatically separates into upper and lower clad sub-plates.

Next, the leveling process specifically includes: placing the single-sided clad sub-plate obtained from the cutting process on a leveling machine with the cladding layer facing up for leveling, wherein: when leveling transversely, control the leveling force of the leveling machine F1=ν×a×b×c_{T}×σ_{T}/(d×(ν-c_{T}/a)); when leveling longitudinally, control the leveling force of the leveling machine F2=a×b×cv×σ_{V}/(d+c_{V}); where a is the width of the clad sub-plate in mm, b is the thickness of the clad sub-plate in mm, c_{T} is the flatness deviation per meter in the transverse direction of the clad sub-plate in mm, cv is the flatness deviation per meter in the longitudinal direction of the clad sub-plate in mm, d is the working distance of the leveling machine, σ_{T} is the tensile yield strength in the transverse direction of the clad sub-plate, σ_{V} is the tensile yield strength in the longitudinal direction of the clad sub-plate, v is the Poisson's ratio. Thus, through adjusting the leveling force and direction, better plate shape can be further ensured.

After the final leveling process, single-sided stainless steel composite plate products are obtained.

Further, an embodiment of the present application also provides a single-sided stainless steel composite plate, which is prepared by the preparation method introduced above, including a base material layer transformed from the said base material, and a cladding layer transformed from the said cladding material.

Preferably, the cladding material/cladding layer is preferably austenitic stainless steel. Its chemical composition by mass percentage is: C≤0.15%, Si≤1.00%, Mn≤2.00%, P≤0.045%, S≤0.030%, Ni: 6.0~22.0%, Cr: 16.0~26.0%, Mo≤3.0%, remainder being Fe and unavoidable impurities.

As a preferred scheme, the chemical composition of the base material/base material layer by mass percentage is: C: 0.03~0.16%, Si: 0.11~0.29%, Mn: 1.31~1.54%, P≤0.018%, S≤0.0030%, Cr: 0.06~0.29%, Nb: 0.011~0.034%, Ti: 0.011~0.019%, Al: 0.030~0.040%, remainder being Fe and unavoidable impurities.

More preferably, the chemical composition of the base material/base material layer by mass percentage is: C: 0.08~0.12%, Si: 0.16~0.24%, Mn: 1.36~1.44%, P≤0.015%, S≤0.0025%, Cr: 0.11~0.19%, Ni: 0.06~0.14%, Nb: 0.016~0.024%, Ti: 0.011~0.019%, Al: 0.030~0.040%, remainder being Fe and unavoidable impurities.

More preferably, the chemical composition of the base material/base material layer by mass percentage is: C: 0.05~0.09%, Si: 0.14~0.22%, Mn: 1.41~1.49%, P≤0.012%, S≤0.0020%, Cr: 0.16~0.24%, Ni: 0.11~0.19%, Mo: 0.11~0.19%, Nb: 0.021~0.029%, Ti: 0.011~0.019%, Al: 0.030~0.040%, remainder being Fe and unavoidable impurities.

Alternatively preferably, the chemical composition of the base material/base material layer by mass percentage is: C: 0.03~0.07%, Si: 0.11~0.19%, Mn: 1.46~1.54%, P≤0.010%, S≤0.0015%, Cr: 0.21~0.29%, Ni: 0.16~0.24%, Cu: 0.16~0.24%, Mo: 0.16~0.24%, Nb: 0.026~0.034%, Ti: 0.011~0.019%, Al: 0.030~0.040%, remainder being Fe and unavoidable impurities.

The said stainless steel composite plate combines excellent mechanical properties and corrosion resistance, and has superior plate shape, interface bonding quality, uniformity, impact toughness and surface quality compared to prior art.

Specifically, sampling of the single-sided stainless steel composite plate of an embodiment of the present application is performed according to GB/T 2975-Steel and Steel Products-"Sampling Location and Sample Preparation for Mechanical Property Testing", and:
Regarding plate shape, testing according to GB/T 709-"Dimensions, Shape, Weight and Permissible Deviations of Hot-Rolled Steel Plates and Strips", the flatness deviation of the composite plate is ≤3mm/m, even ≤2mm/m;
Regarding interface bonding quality, according to GB/T 6396-"Test Methods for Mechanical and Process Properties of Composite Steel Plates", tensile testing of the composite plate shows that the composite interface bonding rate is 100%, shear strength is ≥300MPa, even ≥360MPa;
Regarding mechanical properties, according to GB/T 6396-"Test Methods for Mechanical and Process Properties of Composite Steel Plates" and GB/T 228.1-"Metallic Materials-Tensile Testing-Part 1: Method of Test at Room Temperature", tensile testing shows that the composite plate has yield strength ≥345MPa, tensile strength ≥490MPa, elongation after fracture ≥18%, yield ratio ≤0.85; the Vickers hardness difference in the thickness direction of the base material layer of the composite plate is ≤10, the strength difference between head, middle and tail is ≤40MPa, and the strength difference across the entire plate is ≤40MPa;
According to GB/T 6396-"Test Methods for Mechanical and Process Properties of Composite Steel Plates" and GB/T 229-"Metallic Materials-Charpy Pendulum Impact Test Method", testing shows that the composite plate has impact energy at 0°C ≥120J, at -20°C ≥120J, at -40°C ≥120J, even at 0°C ≥240J, at -20°C ≥200J, at -40°C ≥150J;
According to GB/T 2975-Steel and Steel Products-"Sampling Location and Sample Preparation for Mechanical Property Testing", sampling is performed, and according to GB/T 6396-"Test Methods for Mechanical and Process Properties of Composite Steel Plates", testing shows that the composite plate has no cracks after 180° outer bending and no cracks after 180° inner bending.

According to GB/T 6396-"Test Methods for Mechanical and Process Properties of Composite Steel Plates" for sampling, and according to GB/T 4334-"Corrosion of Metals and Alloys-Test Methods for Intergranular Corrosion of Austenitic and Ferritic-Austenitic (Duplex) Stainless Steels", testing shows that after boiling in sulfuric acid-copper sulfate solution for 20h and 180° bending, the cladding layer shows no intergranular corrosion cracks.

In summary, compared to prior art, the present application, on one hand: through specific process control throughout the preparation method, ensures the corrosion resistance and mechanical strength of the stainless steel composite plate, avoiding degradation of corrosion resistance and mechanical properties during composite blank rolling; on another hand, solves the problems of poor plate shape, poor interface bonding quality, and poor surface quality of existing thick stainless steel composite plates, making the stainless steel composite plate have excellent plate shape and interface bonding quality, and avoiding obvious surface defects such as pits and scratches brought by existing explosion bonding technology; on yet another hand, can also solve the dissimilar welding problems in existing technology, with more diverse types of composite plates, higher usage scenarios, and high yield rate and production efficiency in the production process.

The detailed description listed above is only specific explanation for feasible embodiments of the present application, they are not used to limit the protection scope of the present application, all equivalent implementations or changes that do not deviate from the technical spirit of the present application should be included in the protection scope of the present application.

The beneficial effects of the present application are further explained through multiple examples below, of course, these examples are only part of the many variant embodiments contained in the present application, not all.

The embodiments of the composite blank preparation stage adopted by these examples are as shown above, referring to Tables 1~5 above, and the specific chemical compositions of the steel grades of cladding materials and base materials in Tables 1~5 are shown in Table 6. Where "-" indicates that the corresponding element was not actively added during billet preparation (content is zero or close to zero).

**Table 6**

| the chemical composition of base material by mass percentage (%) | | | | | | | | | | | | | | | |
|---|---|---|---|---|---|---|---|---|---|---|---|---|---|---|---|
| Steel Grade | C | Si | Mn | | P | S | Cr | Nb | Ti | | Al | | Ni | Mo | Cu |
| Q345 | 0.15 | 0.21 | 1.41 | | 0.017 | 0.0028 | 0.10 | 0.012 | 0.015 | | 0.034 | | - | - | - |
| Q370 | 0.10 | 0.21 | 1.39 | | 0.015 | 0.0024 | 0.15 | 0.020 | 0.014 | | 0.03 4 | | 0.12 | - | - |
| Q420 | 0.07 | 0.19 | 1.44 | | 0.012 | 0.0019 | 0.19 | 0.025 | 0.014 | | 0.036 | | 0.13 | 0.12 | - |
| Q500 | 0.06 | 0.13 | 1.50 | | 0.010 | 0.0014 | 0.22 | 0.028 | 0.015 | | 0.035 | | 0.18 | 0.17 | 0.19 |

| the chemical composition of cladding material by mass percentage (%) | | | | | | | | | | | | | | | |
|---|---|---|---|---|---|---|---|---|---|---|---|---|---|---|---|
| Steel Grade | | C | | Si | | Mn | P | S | | Ni | | Cr | | Mo | |
| 316L | | 0.017 | | 0.40 | | 1.04 | 0.031 | 0.002 | | 10.08 | | 16.50 | | 2.04 | |

Further, for each example, implementation was carried out according to the preferred embodiments of heating process, rolling process, cooling process, cutting process and leveling process provided by the present application, finally obtaining single-sided stainless steel composite plate products. The total thickness, base material layer thickness, and cladding layer thickness of the composite plate products from these examples are shown in Table 7. Where ranges in the columns of composite plate thickness and base material layer thickness in Table 7 indicate minimum thickness-maximum thickness.

Further, using the sampling standards and test standards disclosed above, samples were taken and tested from the composite plates of each example, all examples showed 100% interface bonding rate, passed 180° inner bending test (no cracks), passed 180° outer bending test (no cracks), and after boiling in sulfuric acid-copper sulfate solution for 20h and 180° bending, the cladding layer showed no intergranular corrosion cracks. Additionally, other performance test results are shown in Tables 7 and 8.

**Table 7**

| | clad plate thickness, mm | base layer thickness, mm | cladding layer thickness, mm | Yield strength, MPa | Tensile strength, MPa | Elongation after fracture, % |
|---|---|---|---|---|---|---|
| Example 1 | 27 | 24 | 3 | 385 | 523 | 30 |
| Example 2 | 5 | 4 | 1 | 419 | 558 | 26 |
| Example 3 | 19 | 16 | 3 | 565 | 676 | 25 |
| Example 4 | 31-39 | 28~36 | 3 | 366 | 532 | 30 |
| Example 5 | 23~31 | 20~28 | 3 | 382 | 539 | 31 |
| Example 6 | 19~27 | 16~24 | 3 | 428 | 546 | 30 |
| Example 7 | 15~23 | 12~20 | 3 | 478 | 584 | 27 |
| Example 8 | 12~18 | 9~15 | 3 | 567 | 689 | 25 |
| Example 9 | 30~36 | 27~33 | 3 | 411 | 543 | 32 |
| Example 10 | 33 | 30 | 3 | 557 | 672 | 25 |
| Example 11 | 39 | 36 | 3 | 468 | 578 | 27 |
| Example 12 | 55 | 45 | 10 | 356 | 525 | 29 |
| Example 13 | 35 | 30 | 5 | 358 | 522 | 31 |
| Example 14 | 12 | 10 | 2 | 427 | 539 | 29 |
| Example 15 | 15 | 12 | 3 | 566 | 685 | 25 |

**Table 8**

| | Shear strength, MPa | -40°C impact energy, J | flatness deviation, mm/m | Vickers hardness difference | Strength difference among head, middle and tail, MPa | Whole plate strength difference, MPa |
|---|---|---|---|---|---|---|
| Example 1 | 378 | 268 | 1 | 8 | 24 | 27 |
| Example 2 | 328 | - | 3 | 5 | 18 | 20 |
| Example 3 | 430 | 313 | 2 | 9 | 30 | 33 |
| Example 4 | 350 | 238 | 1 | 8 | 24 | 29 |
| Example 5 | 382 | 234 | 1 | 9 | 30 | 30 |
| Example 6 | 391 | 258 | 2 | 9 | 28 | 30 |
| Example 7 | 419 | 305 | 2 | 9 | 29 | 30 |
| Example 8 | 425 | 299 | 3 | 9 | 30 | 32 |
| Example 9 | 408 | 243 | 1 | 8 | 23 | 28 |
| Example 10 | 392 | 225 | 2 | 8 | 26 | 30 |
| Example 11 | 432 | 285 | 1 | 9 | 31 | 36 |
| Example 12 | 341 | 221 | 1 | 9 | 31 | 35 |
| Example 13 | 362 | 245 | 1 | 9 | 29 | 35 |
| Example 14 | 403 | 286 | 3 | 8 | 24 | 30 |
| Example 15 | 442 | 262 | 2 | 8 | 23 | 30 |

## Claims

1. A method for preparing a stainless steel clad plate for bridge structures, wherein the method comprises process steps of billet preparation, release agent coating, blank assembly, seal welding, vacuumizing, sealing, heating, rolling, cooling, cutting, and leveling; wherein:
in the blank assembly step: a blank assembly is formed by arranging an upper carbon steel base material A, a lower carbon steel base material B, an intermediate layer comprising at least two stainless steel cladding materials, and four sealing strips surrounding four side edges of the intermediate layer, wherein gas shielded welding is performed between the sealing strips and base material A, and between the sealing strips and base material B to form a base blank; wherein the base blank has grooves formed by base material A, sealing strips and base material B on all four side edges, and a circular through hole is formed in the sealing strip on one side edge of the base blank, and a steel pipe with an outer diameter of r is welded in the through hole;
in the seal welding step: overlay welding is performed on the grooves, wherein during overlay welding, a hole concentric with the steel pipe and having a radius R>r is reserved around the steel pipe; the overlay welding is terminated when the penetration depth of the groove on the side edge where the steel pipe is located reaches 2/3 of the groove depth, and the penetration depth of the grooves on other side edges reaches more than 2/3 of the groove depth;
in the sealing step: after the vacuumizing step of the base blank is completed, the steel pipe is heated with a flame gun, flattened, and folded into the reserved hole; then gas shielded welding is performed to fully weld the hole to seal the steel pipe in the hole; thereafter, overlay welding is continued until the grooves are filled, and finally cover welding is performed to obtain a composite blank;
in the rolling step: the composite blank from the heating furnace is rolled to produce a unified clad plate; during the entire rolling process, transverse rolling is adopted for the first n passes, and longitudinal rolling is adopted from the n+1th pass, and the reduction amount of the first pass rolling is ≥25mm and the rolling temperature is ≥1060°C, the width of the billet obtained by the nth pass rolling is Wt+(0~40)mm, where Wt is the target width of the unified clad plate, and the rolling temperature of the nth pass is ≥1030°C; between the nth pass and the n+1th pass, and between the n+2th pass and the n+3th pass, the billet is reciprocally water-cooled once in 6 sets of manifolds, wherein the cooling water amount of the upper manifold in each set is 120~180m³/h, the cooling water amount of the lower manifold is 160~220m³/h, and the roller table speed is 0.8~1.2m/s; the rolling reduction amounts from the n+1th pass to the n+3th pass are all ≥40mm, and the rolling temperature of the n+1th pass is ≥950°C; at the m-th pass, the rolling temperature is ≥900°C, and rolling continues until the billet thickness is 2.5~3.5 times the target thickness of the unified clad plate; then water cooling is performed until the surface temperature of the billet drops below 840°C; thereafter, a second stage rolling is performed until the billet thickness reaches the target thickness of the unified clad plate to complete the entire rolling process, wherein the rolling temperature of the first pass in the second stage rolling is 810°C~840°C, and the rolling temperature of the last pass is 780~810°C.

2. The method for preparing a stainless steel clad plate for bridge structures according to claim 1, wherein in the seal welding step, the seal welding step is ended when the penetration depth of the groove on the side edge where the steel pipe is located reaches 2/3 of the groove depth, and the penetration depth of the grooves on other side edges reaches the groove depth.

3. The method for preparing a stainless steel clad plate for bridge structures according to claim 1, wherein during overlay welding, multi-layer and multi-pass welding is performed on the grooves in an order of upper edge and lower edge first, followed by middle area, with more than 4 passes per layer, an inter-pass temperature of 140~160°C, a total of 6~8 welding layers, and an inter-layer temperature of 150~250°C.

4. The method for preparing a stainless steel clad plate for bridge structures according to claim 1, wherein in the blank assembly step, the through hole is formed in the sealing strip at one short side edge of the base blank, and the through hole is centered at a position of 1/3 of the length and 1/2 of the width of the sealing strip;
the end face of the steel pipe is flush with the inner surface of the sealing strip.

5. The method for preparing a stainless steel clad plate for bridge structures according to claim 1, wherein in the blank assembly step, bevels are formed on the upper edge and lower edge of the outer surface of the sealing strips, wherein the bevel angle is 10~20°, and the vertical depth is 10~15mm.

6. The method for preparing a stainless steel clad plate for bridge structures according to claim 1, wherein in the blank assembly step, the intermediate layer is formed by stacking cladding material A and cladding material B.

7. The method for preparing a stainless steel clad plate for bridge structures according to claim 6, wherein in the base blank obtained from the blank assembly step, base material A and base material B are plates of equal thickness.

8. The method for preparing a stainless steel clad plate for bridge structures according to claim 6, wherein in the base blank obtained from the blank assembly step, base material A and base material B are non-uniform thickness plates with thickness varying along X direction, and the surfaces to be clad of base material A and base material B are mutually complementary; wherein the X direction is the length direction or width direction of base material A and base material B.

9. The method for preparing a stainless steel clad plate for bridge structures according to claim 8, wherein base material A and base material B are non-uniform thickness plates with monotonically varying thickness along X direction, and their surfaces to be clad are inclined planes;
or, base material A and base material B are non-uniform thickness plates with non-monotonically varying thickness along X direction, and their surfaces to be clad each comprise two or more planes arranged along X direction.

10. The method for preparing a stainless steel clad plate for bridge structures according to claim 1, wherein in the blank assembly step, the intermediate layer is formed by two or more cladding materials arranged side by side along X direction, wherein the X direction is the length direction or width direction of base material A and base material B;
adjacent cladding materials have parallel complementary beveled edges at their joining side edges, and each cladding material has a smaller surface in the thickness direction forming a non-cladding surface and a larger surface forming a surface to be clad.

11. The method for preparing a stainless steel clad plate for bridge structures according to claim 1, wherein in the heating step: the composite blank is heated in a heating furnace in five stages comprising preheating stage, first heating stage, second heating stage, third heating stage and soaking stage, wherein the temperature of preheating stage is ≤850°C, the temperature of first heating stage is 1080±30°C, the temperature of second heating stage is 1160±30°C, the temperature of third heating stage is 1220±20°C, the temperature of soaking stage is 1190±20°C, the holding time of third heating stage is (0.25~0.35)×t min/mm where t is the thickness of the composite blank, and the holding time of soaking stage is 15min~30min.

12. The method for preparing a stainless steel clad plate for bridge structures according to claim 1, wherein in the cooling step: the unified clad plate obtained from rolling enters an ultra-rapid cooling system, wherein the ultra-rapid cooling system has 24 sets of cooling manifolds arranged at 1m intervals along the roller table, each set of cooling manifolds has a cooling distance of 1m, when the unified clad plate passes through the ultra-rapid cooling system, the on-off states of all 24 sets of cooling manifolds are controlled by turning on N sets of cooling manifolds followed by turning off M sets of cooling manifolds, the cooling water pressure is 0.15~0.30MPa, the cooling rate is 3~15°C/s, and the final cooling temperature is 380~590°C; wherein N takes values of 2, 3 or 4, M takes values of 2, 3 or 4.

13. The method for preparing a stainless steel clad plate for bridge structures according to claim 12, wherein in the cooling step: after leaving the ultra-rapid cooling system, the unified clad plate is air-cooled on a cooling bed until room temperature.

14. The method for preparing a stainless steel clad plate for bridge structures according to claim 12, wherein in the cooling step: after leaving the ultra-rapid cooling system, the unified clad plate is stack-cooled between two steel plates with temperature of T_{f}-150°C~T_{f}+150°C, the stack cooling time is 0.4min/mm×t0±5min, where t0 is the thickness of the unified clad plate; after stack cooling is completed, the unified clad plate is naturally cooled to room temperature on a cooling bed;
wherein, T_{f}=550+30Si-20Mn+15Cr-15Ni+10Mo, where the element symbols in the formula represent 100 times the mass percentage of each element in base material A and/or base material B, and base material A and base material B have the same chemical composition.

15. The method for preparing a stainless steel clad plate for bridge structures according to claim 12, wherein when the thickness of the unified clad plate is below 54mm, the roller table speed of the ultra-rapid cooling system is 0.4~0.8m/s, and the unified clad plate passes through the ultra-rapid cooling system once before leaving;
or, when the thickness of the unified clad plate is >54mm and <70mm, the roller table speed of the ultra-rapid cooling system is above 0.2m/s but less than 0.6m/s, and the unified clad plate passes through the ultra-rapid cooling system once before leaving;
or, when the thickness of the unified clad plate is ≥70mm, the roller table speed of the ultra-rapid cooling system is 0.4~0.9m/s, the unified clad plate first enters forward from the entrance of the ultra-rapid cooling system, when its head reaches the 24th set of cooling manifolds, the roller table reverses direction, and the unified clad plate passes through the ultra-rapid cooling system in reverse direction and leaves from the entrance of the ultra-rapid cooling system.

16. The method for preparing a stainless steel clad plate for bridge structures according to claim 1, wherein in the leveling step: the clad sub-plate obtained from the cutting step is placed on a leveling machine with the cladding material facing upward for leveling, wherein: when leveling transversely, the leveling force of the leveling machine is controlled as F1=ν×a×b×c_{T}×σ_{T}/(d×(ν-c_{T}/a)); when leveling longitudinally, the leveling force of the leveling machine is controlled as F2=a×b×c_{V}×σ_{V}/(d+c_{V}); where a is the width of the clad sub-plate in mm, b is the thickness of the clad sub-plate in mm, c_{T} is the flatness deviation per meter of the clad sub-plate in transverse direction in mm, cv is the flatness deviation per meter of the clad sub-plate in longitudinal direction in mm, d is the working distance of the leveling machine, σ_{T} is the tensile yield strength of the clad sub-plate in transverse direction, σ_{V} is the tensile yield strength of the clad sub-plate in longitudinal direction, and v is the Poisson's ratio.

17. The method for preparing a stainless steel clad plate for bridge structures according to claim 1, wherein the step "performing three vacuum evacuations and two vacuum breaking operations on the internal space of the base blank through the steel pipe, and finally maintaining the vacuum degree of the internal space of the base blank at ≤10⁻²Pa" comprises:
first connecting the steel pipe to a vacuum pump to evacuate the internal space of the base blank to a vacuum degree of ≤10⁻²Pa, then maintaining the pressure for more than 4h; next connecting the steel pipe to a nitrogen supply device to break the vacuum and fill with nitrogen gas;
then connecting the steel pipe to the vacuum pump again to evacuate the base blank to a vacuum degree of ≤10⁻¹Pa without pressure maintaining; next connecting the steel pipe to the nitrogen supply device again to break the vacuum and fill with nitrogen gas;
finally, connecting the steel pipe to the vacuum pump for the third time to evacuate the base blank to a vacuum degree of ≤10⁻²Pa.

18. The method for preparing a stainless steel clad plate for bridge structures according to claim 1, wherein in the release agent coating step: the release agent is coated on the non-cladding surface of the cladding material;
wherein the release agent is a coating liquid containing silicon oxide and magnesium oxide with a mass ratio of 3:1; or, the release agent comprises by mass ratio: 25~35% silicon nitride, 5~10% thermosetting amino resin, and 55~70% water.

19. A stainless steel clad plate for bridge structures prepared by the method according to claim 1, wherein the chemical composition of its base material layer in mass percentage is: C: 0.03~0.16%, Si: 0.11~0.29%, Mn: 1.31~1.54%, P≤0.018%, S≤0.0030%, Cr: 0.06~0.29%, Ni≤0.24%, Cu≤0.24%, Mo≤0.24%, Nb: 0.011~0.034%, Ti: 0.011~0.019%, Al: 0.030~0.040%, the remainder being Fe and unavoidable impurities;
the chemical composition of its cladding material layer in mass percentage is: C≤0.15%, Si≤1.00%, Mn≤2.00%, P≤0.045%, S≤0.030%, Ni: 6.0~22.0%, Cr: 16.0~26.0%, Mo≤3.0%, the remainder being Fe and unavoidable impurities;
the bonding rate at the composite interface of the clad plate is 100%, and the shear strength is ≥300MPa.

20. The stainless steel clad plate according to claim 19, wherein the cladding material layer covers a portion rather than the entire upper surface of the base material layer.
